# EUROPÄISCHE PATENTSCHRIFT

(11) **EP 3 281 551 B1**
(45) Veröffentlichungstag und Bekanntmachung des Hinweises auf die Patenterteilung: **06.10.2021**
(21) Anmeldenummer: 17001326.2
(22) Anmeldetag: 02.08.2017
(51) Int. Cl.: A45F 3/04, A45F 3/08, A45F 3/10

(54) **RÜCKENTRAGE UND VERLÄNGERUNGSPLATTE FÜR EINE RÜCKENTRAGE**
BACKPACK AND EXTENSION PLATE FOR A BACKPACK
DISPOSITIF DE PORTAGE SUR LE DOS ET PLAQUE D'EXTENSION POUR UN DISPOSITIF DE PORTAGE SUR LE DOS

(30) Priorität: 10.08.2016 DE 102016009753
(43) Veröffentlichungstag der Anmeldung: 14.02.2018
(73) Patentinhaber: Andreas Stihl AG & Co. KG, 71336 Waiblingen (DE)
(72) Erfinder: Riehmann, Jens, 70176 Stuttgart (DE); Zeller, Markus, 73527 Schwäbisch Gmünd (DE); Schliemann, Harald, 71334 Waiblingen (DE)
(74) Vertreter: Wasmuth, Rolf

(56) Entgegenhaltungen:
- WO-A1-01/97917
- DE-U1- 8 716 869
- JP-U- S51 145 168

## Beschreibung

Die Erfindung betrifft eine Rückentrage nach Anspruch 1 und eine Verlängerungsplatte für eine Rückentrage nach Anspruch 14.

Rückentragen mit einem oder mehreren Schultergurten sind aus dem Stand der Technik hinreichend bekannt. Der Tragekomfort solcher Rückentragen hängt davon ab, wie gut die Körpergröße des Benutzers und die Länge der Rückenplatte der Rückentrage aufeinander abgestimmt werden können.

Darüber hinaus können Rückentragen mit oder ohne Hüftgurt ausgestattet sein. Bei einer Rückentrage ohne Hüftgurt wird die Gewichtskraft der Rückentrage und ihrer Last im Wesentlichen über Schultergurte auf die Schultern eines Benutzers übertragen. Die Rückentrage lehnt sich hierbei am unteren Rücken des Benutzers mit einer Anlagefläche am Benutzer an, und die Schultergurte liegen auf den Schultern des Benutzers. Dabei sind die Schultergurte an einer oberen Befestigungsstelle der Rückentrage befestigt. Diese Befestigungsstellen liegen im aufgesetzten Zustand der Rückentrage in Höhenrichtung unterhalb der Schultern des Benutzers. So kann eine relativ große Auflagefläche der Schultergurte auf den Schultern und dem Rücken des Benutzers erzielt werden, um die aufzunehmende Gewichtskraft großflächig zu verteilen.

Aus der JP 2013-091203 A ist eine Rückentrage bekannt, bei der mehrere obere Befestigungsstellen vorgesehen sind. Eine derartige Rückenplatte ist steif ausgebildet, wobei bei Nutzung angepasster Befestigungsstellen eine sehr große Länge der Rückenplatte nach oben übersteht, was bei Nutzung der Rückentrage störend sein kann.

Bei einer Rückentrage mit Hüftgurt werden die Schultern signifikant entlastet, da zumindest ein großer Teil der Gewichtskraft von dem Hüftgurt auf die Hüfte des Benutzers übertragen wird. Nur ein geringerer Anteil der Gewichtskraft wird über die Schultergurte auf die Schultern des Benutzers übertragen.

Aus der US 6,536,641 B1 ist eine Rückentrage mit einem System zur Änderung des Abstands zwischen Hüftgurt und oberer Befestigungsstelle des Schultergurts bekannt. Hierzu sind am unteren Ende der Rückenplatte zwei Stangen vorgesehen, die sich stufenlos aus der Rückenplatte ausziehen lassen und zwischen denen ein Polster zur Anlage am Hüftbereich des Benutzers gespannt ist. Das obere Ende des Schultergurtes ist an der Rückenplatte angeordnet, das untere Ende ist an der Stange angeordnet. Teleskopierbare Systeme weisen eine geringe Steifigkeit auf und sind aufwändig in der Herstellung. Durch die Verlängerung der Rückenplatte nach unten ist einerseits ein sicheres Abstellen der Rückentrage auf dem Untergrund erschwert; andererseits erhöht sich der Schwerpunkt der beladenen Rückentrage gegenüber dem Rücken des Benutzers, was den Tragekomfort insbesondere in unebenem Gelände beeinträchtigt.

Aus der DE 87 16 869 U1 ist ein Traggestell mit Traggurten bekannt, das an seinem oberen Ende eine Freisparung für eine große Kopffreiheit aufweist.

Aus der WO 01/97917 A1 ist ein Traggestell bestehend aus einer Tragplatte mit einem Führungskanal und einer ausziehbar im Führungskanal angeordneten Verlängerungsplatte bekannt.

Soll dieselbe Rückentrage mit unterschiedlichen Tragsystemen (mit bzw. ohne Hüftgurt zusätzlich zum Schultergurt) verwendet werden und der Hüftgurt bzw. die Anlagefläche hierbei in gleicher Höhe an der Rückenplatte angeordnet sein, ist eine Anpassung des Tragsystems und dessen Anbindung an die Rückenplatte erforderlich.

Der Erfindung liegt die Aufgabe zugrunde, eine Rückentrage zu schaffen, die einfach herstellbar ist und sich mit unterschiedlichen Tragsystemen gleichermaßen verwenden lässt und ohne Beeinträchtigung des Tragekomforts eine sichere Fixierung der Last auf dem Rücken eines Benutzers gewährleistet.

Eine weitere Aufgabe der Erfindung liegt darin, Mittel für eine einfache Verlängerung einer Rückenplatte anzugeben.

Bezüglich der Rückentrage wird die Aufgabe durch eine Rückentrage mit den Merkmalen des Anspruchs 1 gelöst.

Bezüglich der Mittel zur Verlängerung der Rückenplatte wird die Aufgabe durch eine Verlängerungsplatte mit den Merkmalen des Anspruchs 14 gelöst.

Dadurch, dass die Rückenplatte im Bereich des oberen Endabschnitts eine Ausnehmung zur Aufnahme einer optional anzuordnenden Verlängerungsplatte aufweist, die in Richtung der Längserstreckung der Rückenplatte zum oberen Ende der Rückenplatte hin offen ausgebildet ist, kann in der Ausnehmung eine Verlängerungsplatte montiert werden, die die Rückenplatte zu deren Verlängerung in Höhenrichtung bündig fortsetzen kann.

Durch die vorgesehene Aufnahme ist die Möglichkeit einer optionalen Verlängerung der Rückenplatte geschaffen, so dass die Problematik der Anpassung der Lage der oberen Befestigungsstelle der Schultergurte in Abhängigkeit des verwendeten Tragsystems in einfacher Weise gelöst ist. Sofern die Rückentrage für ein Tragsystem ohne Hüftgurt optimiert ist, können die Befestigungsstellen der Schultergurte bedarfsweise, also wenn ein Hüftgurt benötigt wird, durch Verwendung einer Verlängerungsplatte höher angeordnet werden. Sofern die Rückentrage für ein Tragsystem mit Hüftgurt optimiert ist, können die Befestigungsstellen der Schultergurte bedarfsweise, also wenn kein Hüftgurt gewünscht wird, ohne Anordnung der Verlängerungsplatte an der Rückenplatte und damit niedriger festgelegt werden. Ein und dieselbe Rückenplatte kann in einfacher Weise für unterschiedliche Tragsysteme genutzt werden, ohne dass Beeinträchtigungen des Tragekomforts oder der Sicherheit der Last auf dem Rücken des Benutzers auftreten. Die Rückentrage ist ohne Verwendung der Verlängerungsplatte ebenso voll funktionstüchtig wie mit Verwendung der Verlängerungsplatte.

Eine optional anzuordnende Verlängerungsplatte kann auf stabile Weise durch Anlage in der Ausnehmung an der Rückenplatte an der Rückentrage fixiert werden. Die Ausnehmung in der Rückenplatte ist einfach herzustellen, wobei die Ausnehmung in der Rückenplatte zum oberen Ende der Rückenplatte hin offen ausgebildet ist. Eine montierte Verlängerungsplatte kann über das obere Ende der Rückenplatte in Richtung der Längserstreckung der Rückenplatte vorstehen. Auf diese Weise lässt sich die Rückenplatte auf einfache Weise in Richtung ihrer Längserstreckung durch Einsetzen der Verlängerungsplatte in die Ausnehmung verlängern. Die alternativen Befestigungsstellen an der Verlängerungsplatte sind gegenüber der Rückenplatte vorteilhaft gleichermaßen steif angeordnet wie die oberen Befestigungsstellen, die direkt an der Rückenplatte ausgebildet sind. Dadurch wird sowohl mit als auch ohne montierte Verlängerungsplatte eine stabile Rückenfläche der Rückentrage bereitgestellt.

Vorteilhaft ist der erste Gurtabschnitt des Schultergurts an der oberen Befestigungsstelle im Bereich der Ausnehmung der Rückenplatte festgelegt; bei in der Ausnehmung montierter Verlängerungsplatte ist der erste Gurtabschnitt des Schultergurts an einer alternativen Befestigungsstelle auf der Verlängerungsplatte befestigt. Dadurch ist sichergestellt, dass der erste Gurtabschnitt des Schultergurts sowohl bei montierter Verlängerungsplatte als auch bei Verwendung der Rückentrage ohne Verlängerungsplatte im oberen Bereich der Rückentrage sicher festzulegen ist.

Zweckmäßig ist die obere Befestigungsstelle im Bereich der Ausnehmung der Rückenplatte bei montierter Verlängerungsplatte von der Verlängerungsplatte überdeckt. Dadurch ist vermieden, dass der erste Gurtabschnitt des Schultergurts bei montierter Verlängerungsplatte an der falschen Befestigungsstelle festgelegt werden kann. Bei montierter Verlängerungsplatte ist eine Befestigung des ersten Gurtabschnitts des Schultergurts an der alternativen Befestigungsstelle und nicht mehr an der oberen Befestigungsstelle im Bereich der Ausnehmung der Rückenplatte möglich. Die obere Befestigungsstelle der Rückentrage kann unmittelbar in der Ausnehmung im oberen Endabschnitt der Rückentrage angeordnet sein. Die Anlagefläche der Rückenplatte der Rückentrage am Rücken eines Benutzers ist groß.

Vorteilhaft weist die obere Befestigungsstelle des ersten Gurtabschnitts an der Rückenplatte zu einem unteren Ende des unteren Endabschnitts der Rückenplatte einen ersten Abstand und die alternative Befestigungsstelle auf der Verlängerungsplatte zu dem unteren Ende einen zweiten Abstand auf. Das untere Ende liegt dabei auf jeweils dem gleichen Höhenniveau.

Vorteilhaft weist die obere Befestigungsstelle des ersten Gurtabschnitts an der Rückenplatte zu einer unteren Befestigungsstelle am unteren Ende der Rückenplatte einen ersten Abstand auf und die alternative Befestigungsstelle auf der Verlängerungsplatte zu der unteren Befestigungsstelle am unteren Ende der Rückenplatte einen zweiten Abstand auf.

Die alternative Befestigungsstelle befindet sich in dem oberen, über die Rückenplatte überstehenden Teil der Verlängerungsplatte, sodass die alternative Befestigungsstelle in Höhenrichtung oberhalb der oberen Befestigungsstelle der Rückenplatte liegt. Dadurch ist sichergestellt, dass der erste Gurtabschnitt des Schultergurts bei montierter Verlängerungsplatte weiter vom unteren Ende der Rückenplatte entfernt liegt als bei Verwendung der Rückentrage ohne Verlängerungsplatte. Die Rückentrage lässt sich in einfacher Weise auf das mit der Rückenplatte verwendete Tragsystem anpassen. Die Rückenplatte lässt sich durch die Verlängerungsplatte in einfacher Weise in Längsrichtung verlängern, so dass eine größere Rückenfläche am Rücken eines Benutzers realisiert werden kann. Auf diese Weise kann die Rückentrage nicht nur bei Verwendung unterschiedlicher Tragsysteme eingesetzt werden, sondern auch als modulare Erweiterung einer Standardrückenplatte bei Benutzergruppen mit größerer Stammlänge.

Der erste und der zweite Abstand werden in Richtung der Längserstreckung der Rückentrage gemessen. Bei montierter Verlängerungsplatte liegt die Rückentrage in Richtung der Längserstreckung der Rückenplatte über einem größeren Bereich am Rücken eines Benutzers an als bei Verwendung der Rückentrage ohne Verlängerungsplatte.

Vorteilhaft steht bei in der Ausnehmung der Rückenplatte montierter Verlängerungsplatte die Verlängerungsplatte über das obere Ende der Rückenplatte vor. Zweckmäßig überlappen sich die Verlängerungsplatte und die Rückenplatte in Richtung der Längserstreckung der Rückenplatte. Dadurch kann die Verlängerungsplatte auf stabile Weise an der Rückenplatte fixiert sein.

Insbesondere weist die Verlängerungsplatte in Richtung der Längserstreckung der Rückenplatte eine maximale Höhe auf, wobei die Verlängerungsplatte mit mindestens einem Viertel, insbesondere mindestens einem Drittel, ihrer Höhe an der Rückenplatte anliegt. Dadurch ergibt sich eine stabile Verbindung zwischen der Verlängerungsplatte und der Rückenplatte.

Die Ausnehmung weist eine senkrecht zur Längserstreckung der Rückenplatte gemessene Ausnehmungsbreite auf, und die Ausnehmungsbreite beträgt mindestens zwei Drittel einer in gleicher Richtung gemessenen Seitenbreite der Rückenplatte. Die Richtung der Längserstreckung der Rückenplatte und die Richtung, in der sich die Seitenbreite der Rückenplatte erstreckt, spannen gemeinsam eine Ebene auf, die im Wesentlichen parallel zum Rücken eines Benutzers der Rückentrage verläuft. Die Verlängerungsplatte weist eine senkrecht zur Längserstreckung der Rückenplatte gemessene Breite auf, wobei die Breite mindestens zwei Drittel der in gleicher Richtung gemessenen Seitenbreite der Rückenplatte beträgt. Der Bereich, in dem die Verlängerungsplatte und die Rückenplatte einander überlappen, kann so großflächig ausgeführt sein. Es ergibt sich eine stabile Verbindung zwischen der Verlängerungsplatte und der Rückenplatte.

Zweckmäßig weist die Verlängerungsplatte mindestens zwei alternative Befestigungsstellen auf. Ein in Richtung senkrecht zur Längserstreckung der Rückenplatte zwischen den beiden Befestigungsstellen gemessener maximaler Abstand entspricht mindestens zwei Drittel der in Richtung senkrecht zur Längserstreckung der Rückenplatte gemessenen Breite der Verlängerungsplatte. Die Gewichtskraft der Rückentrage kann so gleichmäßig über die mindestens zwei alternativen Befestigungsstellen auf einen Benutzer übertragen werden. Auch die Verwendung von mindestens zwei Tragegurten ist möglich. Jeweils ein Tragegurt kann einer Schulter des Benutzers zugeordnet werden. Der Tragekomfort für den Benutzer ist erhöht. Die auf die Verlängerungsplatte wirkenden Kräfte sind auf einen großen Bereich der Verlängerungsplatte verteilt.

Vorteilhaft bilden die Rückenseite der Rückenplatte und die in der Ausnehmung montierte Verlängerungsplatte eine gemeinsame Rückenfläche der Rückentrage aus. Die Rückenfläche ist die Fläche der Rückentrage, die dem Benutzer zugewandt liegt. Die Rückenfläche entspricht bei nicht montierter Verlängerungsplatte der Fläche der Rückenseite. Bei montierter Verlängerungsplatte vergrößert sich die Rückenfläche um die dem Benutzer zugewandte Fläche der Verlängerungsplatte.

Zweckmäßig schließt die Verlängerungsplatte derart an die Rückenplatte an, dass die Verlängerungsplatte die Kontur der Rückenplatte ohne Stufe fortsetzt. Vorteilhaft liegt die gesamte Rückenfläche in einer Ebene. Die Verlängerungsplatte steht in Richtung senkrecht zur Längserstreckung und senkrecht zur Richtung, in der sich die Breite der Rückenplatte erstreckt, vorteilhaft nicht über die Dicke der Rückenplatte hervor. Dies erhöht den Tragekomfort für den Benutzer. Die Rückenseite kann mittelbar oder unmittelbar am Rücken des Benutzers anliegen.

Vorteilhaft ist die Verlängerungsplatte starr mit der Rückenplatte verbunden. Dadurch ergibt sich eine stabile Verbindung zwischen Verlängerungsplatte und Rückenplatte. Eine Relativbewegung von Verlängerungsplatte und Rückenplatte ist unterbunden.

Vorteilhaft ist die obere Befestigungsstelle in der Ausnehmung angeordnet. Die obere Befestigungsstelle ist im oberen Endabschnitt der Rückenplatte angeordnet. Der Tragegurt kann über einen großen Teil der Längserstreckung der Rückenplatte verlaufen.

In einem Boden der Ausnehmung der Rückenplatte ist eine erste durchgehende Öffnung ausgebildet, die in Überdeckung zu einer zweiten durchgehenden Öffnung der in der Ausnehmung montierten Verlängerungsplatte liegen kann. Die erste Öffnung und die zweite Öffnung bilden eine gemeinsame Aufnahme für einen Haken. Die Rückentrage kann auch bei montierter Verlängerungsplatte einfach aufgehängt werden. Zumindest ein Teil der Gewichtskraft der beladenen Rückentrage wird direkt von der zweiten durchgehenden Öffnung der Rückenplatte auf den Haken übertragen. Dadurch wird die Verbindung zwischen Verlängerungsplatte und Rückenplatte weniger stark beansprucht. Vorteilhaft ist auf der Rückentrage eine Last angeordnet, wobei die Rückentrage und die Last eine bauliche Einheit bilden. An der Last kann ein Griff zum Tragen der Einheit ausgebildet sein. Dadurch kann der Griff unabhängig von der Verlängerungsplatte gestaltet sein. Ein Tragen der Einheit ist unabhängig davon möglich, ob die Verlängerungsplatte montiert ist oder nicht. Der Griff kann derart an der Last angeordnet sein, dass ein Umgreifen des Griffs sowohl bei montierter als auch bei demontierter Verlängerungsplatte ohne Behinderung möglich ist.

Die Verlängerungsplatte für eine Rückentrage ist starr und einteilig ausgebildet. Die Verlängerungsplatte weist in einer als Breitenrichtung bezeichneten Raumrichtung ihre größte Ausdehnung als Breite auf. Die Verlängerungsplatte weist eine senkrecht zur Breitenrichtung in Richtung einer Höhenrichtung gemessene maximale Höhe auf und eine senkrecht zur Höhenrichtung und zur Breitenrichtung in einer Dickenrichtung gemessene maximale Dicke. Die Breite ist größer als die Höhe und die Höhe ist größer als die Dicke. In der Verlängerungsplatte ist mindestens eine Befestigungsstelle für einen ersten Gurtabschnitt der Rückentrage und/oder ein Anbindungselement zur Anbindung der Verlängerungsplatte an die Rückentrage ausgebildet.

Die Verlängerungsplatte verläuft um ihre Höhenrichtung herum gewölbt. Die Verlängerungsplatte kann der Form des Rückens eines Benutzers angepasst werden.

Die Verlängerungsplatte setzt sich in Höhenrichtung aus einer unteren Hälfte und einer oberen Hälfte zusammen, wobei das Anbindungselement in der unteren Hälfte der Höhe angeordnet und die Befestigungsstelle in der oberen Hälfte der Höhe angeordnet ist. Die Verlängerungsplatte lässt sich durch das Anbindungselement in ihrer unteren Hälfte mit der unteren Hälfte an einer Rückentrage festlegen, wobei gleichzeitig die Befestigungsstelle an der oberen Hälfte der Höhe der Verlängerungsplatte über die Rückentrage herausragen kann. Eine Erhöhung der Befestigungsstelle ist mittels der Verlängerungsplatte möglich. Die Verlängerungsplatte weist insbesondere eine Symmetrieebene auf, welche sich in Hochrichtung und Dickenrichtung aufspannt.

Die Verlängerungsplatte weist in der oberen Hälfte eine erste Dicke und in der unteren Hälfte eine zweite Dicke auf. Die erste Dicke ist größer als die zweite Dicke.

Die Verlängerungsplatte liegt mit ihrer unteren Hälfte in der Ausnehmung, während die obere Hälfte außerhalb der Ausnehmung liegt. Die Verlängerungsplatte kann derart an der Rückenplatte angeordnet sein, dass sie eine gemeinsame Rückenfläche mit der Rückentrage ausbildet.

Die am unteren Ende der Rückenplatte vorgesehene Anlagefläche der Rückenplatte liegt bei Verwendung der Rückentrage ohne Hüftgurt und bei Verwendung der Rückentrage mit Hüftgurt auf etwa gleicher Höhe der Rückentrage, insbesondere auf gleicher Höhe am Rücken des Benutzers an. Die Position der Anlagefläche bleibt somit unabhängig von der Verwendung einer Verlängerungsplatte gleich.

Die Position der Last auf der Rückentrage bleibt bezüglich des Benutzers unabhängig von der Verwendung einer Verlängerungsplatte gleich. Die Ergonomie bei der Verwendung einer auf der Rückentrage angeordneten Last, insbesondere eines Arbeitsgerätes oder eines Akkupacks bleibt somit unabhängig von der Verwendung einer Verlängerungsplatte gleich gut auf den Benutzer abgestimmt.

Weitere Merkmale der Erfindungen ergeben sich aus den weiteren Ansprüchen, der Beschreibung und der Zeichnung, in der nachfolgend im Einzelnen beschriebene Ausführungsbeispiele der Erfindung wiedergegeben sind. Es zeigen:
- Fig. 1: eine perspektivische, schematische Darstellung einer erfindungsgemäßen Rückentrage mit einer montierten Verlängerungsplatte und mit einer als Arbeitsgerät ausgebildeten, auf der Rückentrage befestigten Last,
- Fig. 2: eine perspektivische, schematische Darstellung gemäß Fig. 1 mit demontierten Schultergurten,
- Fig. 3: eine perspektivische, schematische Darstellung gemäß Fig. 2 mit Verlängerungsplatte in Explosionsdarstellung,
- Fig. 4: eine perspektivische, schematische Darstellung gemäß Fig. 2 mit demontierter Verlängerungsplatte,
- Fig. 5: eine perspektivische, schematische Darstellung der Rückentrage gemäß Fig. 1 ohne Last mit Schultergurten und demontierter Verlängerungsplatte,
- Fig. 6: eine perspektivische, schematische Darstellung der Rückentrage gemäß Fig. 1 ohne Last mit Schultergurten und montierter Verlängerungsplatte,
- Fig. 7: eine Seitenansicht auf die Rückentrage nach Fig. 6,
- Fig. 8: eine Ansicht auf die Lastseite der Rückentrage nach Fig. 7,
- Fig. 9: einen Schnitt längs der Linie IX-IX in Fig. 8,
- Fig. 9A: eine vergrößerte Darstellung des Schnittes nach Fig. 9 im Bereich der Verlängerungsplatte,
- Fig. 10: eine Ansicht auf eine Rückenseite der Rückenplatte einer Rückentrage nach Fig. 4 ohne Schultergurte,
- Fig. 11: eine Draufsicht von oben auf die Rückentrage nach Fig. 10,
- Fig. 12: eine perspektivische, schematische Darstellung einer Verlängerungsplatte zur Verwendung mit einer Rückenplatte einer Rückentrage nach den Fig. 1 bis 11,
- Fig. 13: eine Ansicht in Pfeilrichtung XIII auf die Verlängerungsplatte nach Fig. 12,
- Fig. 14: eine Seitenansicht auf die Verlängerungsplatte nach Fig. 12,
- Fig. 15: eine Draufsicht auf die Verlängerungsplatte nach Fig. 12,
- Fig. 16: eine perspektivische, schematische Ansicht auf die Lastseite einer Rückentrage nach den Fig. 1 bis 11 mit als Federn ausgebildete Halter zur Montage eines Arbeitsgerätes,
- Fig. 17: eine perspektivische Ansicht gemäß Fig. 16 mit teilgeschnitten dargestelltem Arbeitsgerät,
- Fig. 18: eine perspektivische Ansicht gemäß Fig. 16 mit montiertem Arbeitsgerät,
- Fig. 19: eine Rückentrage gemäß Fig. 1 mit Schultergurten und einem Hüftgurt.

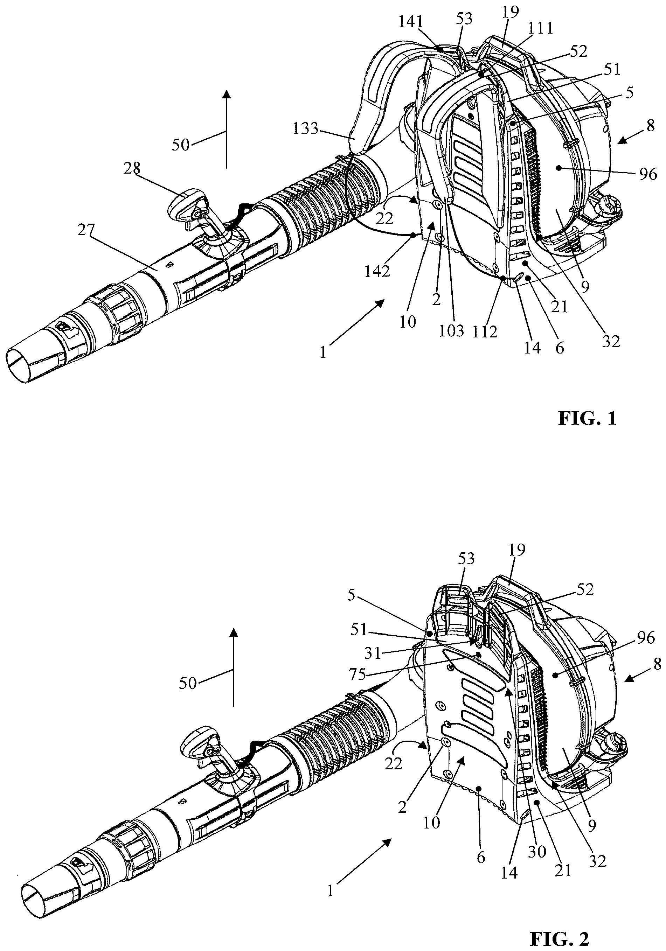

Fig. 1 zeigt eine erfindungsgemäße Rückentrage 1, die zum Tragen einer als rückengetragenes Blasgerät ausgebildeten Last 9 vorgesehen ist. Das Blasgerät umfasst eine Motoreinheit, die auf der Rückentrage 1 angeordnet ist. Weiterhin umfasst das Blasgerät ein Blasrohr 27. Am Blasrohr 27 ist ein Handgriff 28 zur Führung des Blasrohrs 27 und zur Steuerung der Motorleistung festgelegt. Die erfindungsgemäße Rückentrage 1 kann auch zum Tragen anderer Arbeitsgeräte oder anderer Lasten, z. B. einen rückengetragenen Akkupack, verwendet werden.

Die Rückentrage 1 umfasst eine Rückenplatte 2 und - im Ausführungsbeispiel - eine Bodenplatte 4. Die Rückenplatte 2 und die Bodenplatte 4 liegen vorteilhaft in einem rechten Winkel zueinander. Die Rückenplatte 2 weist eine Längserstreckung 50 auf. Die Rückenplatte 2 besitzt in Richtung ihrer Längserstreckung 50 einen unteren Endabschnitt 6 und einen oberen Endabschnitt 5. Die Richtung der Längserstreckung 50 verläuft in Richtung vom unteren Endabschnitt 6 zum oberen Endabschnitt 5. Die Rückenplatte 2 besitzt eine Lastseite 8 und eine Rückenseite 10. Auf der Lastseite 8 ist die Last 9 angeordnet. Die Last 9 stützt sich im Ausführungsbeispiel auf der Bodenplatte 4 ab. Die Bodenplatte 4 ist im unteren Endabschnitt 6 der Rückenplatte 2 mit der Rückenplatte 2 verbunden. Die Rückenseite 10 ist zur mittelbaren oder unmittelbaren Anlage am Rücken eines Benutzers vorgesehen. Die Last kann sich auch direkt an der Lastseite 8 der Rückenplatte 2 abstützen.

Die Rückentrage 1 umfasst eine optionale Verlängerungsplatte 51. Die optionale Verlängerungsplatte 51 ist im Bereich des oberen Abschnitts 5 der Rückenplatte 2 angeordnet. Wie in den Figuren 1 bis 4 dargestellt, ist die Verlängerungsplatte 51 montierbar bzw. demontierbar. Die Rückentrage 1 kann wahlweise mit oder ohne Verlängerungsplatte 51 benutzt werden. Durch Nutzung der Verlängerungsplatte 51 kann die Rückentrage 1 für ein Tragsystem mit Schultergurten und/oder Hüftgurt 120 verwendet werden. Die Rückenplatte 2 beinhaltet auch ohne montierte Verlängerungsplatte 51 eine untere und eine obere Befestigungsstelle für den Schultergurt.

Die Rückenplatte 6 ist auch für sich allein als Rückentrage 1 nutzbar. Die Montage der Verlängerungsplatte 51 ist optional. Die Rückentrage ist ohne Verwendung der Verlängerungsplatte ebenso voll funktionstüchtig wie mit Verwendung der Verlängerungsplatte. Die oberen Befestigungsstellen sind starr und unverschieblich an der Rückentrage 1 ausgebildet. Die alternativen Befestigungsstellen sind starr und unverschieblich an der Rückentrage 1 ausgebildet.

Wie in Fig. 1 dargestellt, sind auf der Rückenseite 10 der Rückenplatte 2 zwei lange Schultergurte 103, 133 vorgesehen. Der Schultergurt 103 besitzt einen ersten Gurtabschnitt 111 und einen zweiten Gurtabschnitt 112. Der Schultergurt 133 besitzt einen ersten Gurtabschnitt 141 und einen zweiten Gurtabschnitt 142. Die Verlängerungsplatte 51 umfasst eine alternative Befestigungsstelle 52 und eine alternative Befestigungsstelle 53. Der lange Schultergurt 103 ist im Bereich des ersten Gurtabschnitts 111 an der alternativen Befestigungsstelle 52 befestigt. Der zweite Gurtabschnitt 112 des langen Schultergurts 103 ist an einer unteren Befestigungsstelle 14 der Rückenplatte 2 befestigt. Die untere Befestigungsstelle 14 ist im Bereich des unteren Endabschnitts 6 der Rückenplatte 2 angeordnet. Die Rückenplatte 2 besitzt einen seitlichen Rand 21 und einen seitlichen Rand 22. Die seitlichen Ränder 21, 22 liegen einander gegenüber. Der seitliche Rand 21 und der seitliche Rand 22 erstrecken sich in Richtung der Längserstreckung 50. Der seitliche Rand 21 und der seitliche Rand 22 sind zwischen der Rückenseite 10 und der Lastseite 8 der Rückenplatte 2 angeordnet und verbinden die Rückenseite 10 mit der Lastseite 8. Der seitliche Rand 21 ist der linken Schulter eines Benutzers, und der seitliche Rand 22 der rechten Schulter eines Benutzers zugeordnet.

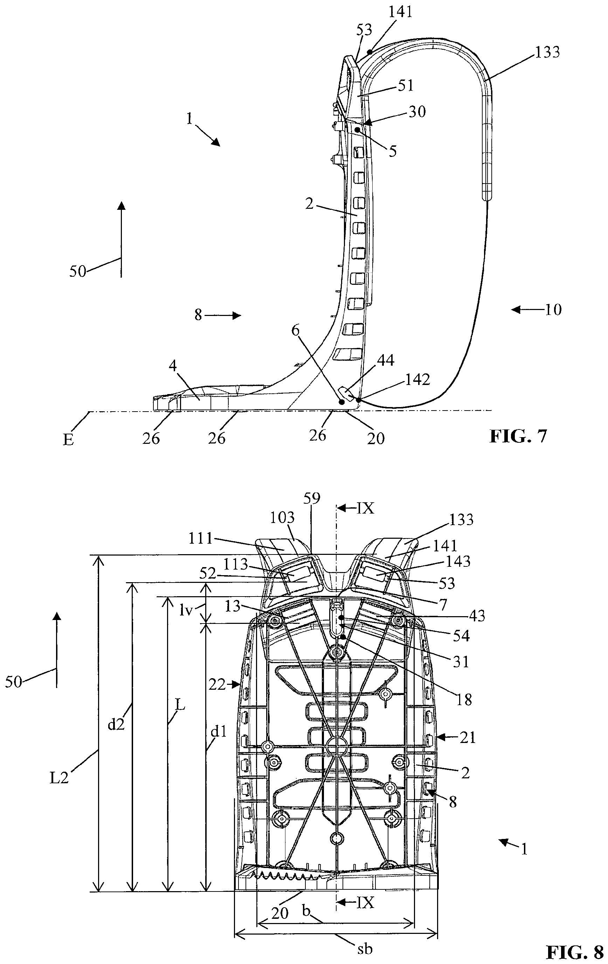

Im unteren Endabschnitt 6 der Rückenplatte 2 ist am seitlichen Rand 21 die untere Befestigungsstelle 14 angeordnet. Im unteren Endabschnitt 6 der Rückenplatte 2 ist am seitlichen Rand 22 eine in Fig. 7 dargestellte untere Befestigungsstelle 42 angeordnet. Die im Ausführungsbeispiel nach Fig. 1 ist der zweite Gurtabschnitt 112 des langen Schultergurts 103 an der unteren Befestigungsstelle 14 befestigt. Entsprechend ist der zweite Gurtabschnitt 142 des langen Schultergurts 133 an der unteren Befestigungsstelle 44 der Rückenplatte 2 befestigt.

Die langen Schultergurte 103, 133 erstrecken sich in Richtung der Längserstreckung 50. Der erste Gurtabschnitt 112 des langen Schultergurts 103 ist an der alternativen Befestigungsstelle 52 der Verlängerungsplatte 51 befestigt. Der erste Gurtabschnitt 142 des langen Schultergurts 133 ist an der alternativen Befestigungsstelle 53 der Verlängerungsplatte 51 befestigt. Beide lange Schultergurte 103, 133 verlaufen auf der Rückenseite 10 der Rückenplatte 2. Der lange Schultergurt 103 ist der linken Schulter des Benutzers zugeordnet. Der lange Schultergurt 133 ist der rechten Schulter des Benutzers zugeordnet.

Die Last 9 umfasst die Motoreinheit, die in einem Gehäuse 96 angeordnet ist. Das Gehäuse 96 ist auf der Rückentrage 1 befestigt. Die Rückentrage 1 und die Last 9 bilden eine Einheit 32. Am Gehäuse 96 der Last 9 ist ein Griff 19 angeformt. Der Griff 19 ist am oberen Ende der Last 9 angeordnet. Vorteilhaft liegt der Griff 19 in Dickenrichtung der Verlängerungsplatte 51 gegenüber den alternativen Befestigungsstellen 52, 53. Die Verlängerungsplatte 51 weist in einer als Breitenrichtung 60 bezeichneten Raumrichtung ihre größte Ausdehnung als Breite b auf. Die Verlängerungsplatte 51 weist ferner eine senkrecht zur Breitenrichtung 60 in Richtung einer Höhenrichtung 70 gemessene maximale Höhe h auf. Die Dickenrichtung 80 liegt senkrecht zur Höhenrichtung 70 und zur Breitenrichtung 60. Der Griff 29 ist in einem Abstand zur Verlängerungsplatte 51 und zur Rückenplatte 2 der Rückentrage 1 angeordnet. Der Abstand zwischen Griff 19 und Verlängerungsplatte 51, bzw. Rückenplatte 2, ist so groß, dass der Durchgriff des Griffs 19 von der Verlängerungsplatte 51 und der Rückenplatte 2 unverdeckt ist. Der Griff 19 ist zum Tragen der Einheit 32, bestehend aus Rückentrage 1 und Last 9, ausgebildet.

Fig. 2 zeigt die Rückentrage 1 aus Fig. 1 ohne Schultergurte. Die Verlängerungsplatte 51 ist im oberen Endabschnitt 5 der Rückenplatte 2 angeordnet und steif mit der Rückenplatte 2 verbunden. Die in der Ausnehmung 15 montierte Verlängerungsplatte 51 ist gegenüber der Rückenplatte 2 unverschieblich und nicht schwenkbar an der Rückenplatte gehalten. Die Verlängerungsplatte 51 und die Rückenplatte 2 bilden eine gemeinsame Rückenfläche 30. Die Verlängerungsplatte 51 setzt die Rückenplatte 2 bündig fort. Die Verlängerungsplatte 51 setzt die Kontur der Rückenplatte 2 im Übergangsbereich von Verlängerungsplatte 51 und Rückenplatte 2 ohne Stufen oder Vorsprünge fort. Die Verlängerungsplatte 2 steht in Richtung senkrecht zur Richtung der Längserstreckung 50 und senkrecht zur Richtung, die sich in Richtung von der Seitenfläche 21 zur Seitenfläche 22 erstreckt, nicht mit ihrer gesamten Dicke, insbesondere gar nicht über die Rückenplatte 2 hervor.

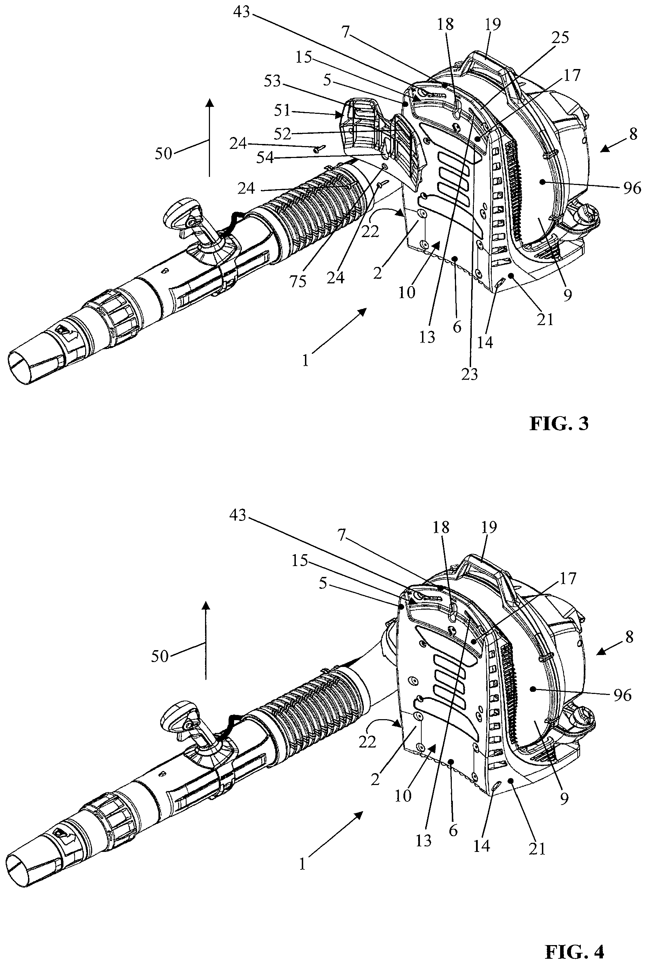

Die Rückenplatte 2 und die Verlängerungsplatte 51 besitzen eine gemeinsame Aufnahme 31. Die Aufnahme 31 ist zur Aufnahme für einen nicht dargestellten Haken vorgesehen. Die Aufnahme 31 ist eine Öffnung, die sowohl die Verlängerungsplatte 15 als auch die Rückenplatte 2 vollständig durchdringt. Wie in Fig. 3 dargestellt, ist die gemeinsame Aufnahme 31 von einer ersten Öffnung 18 in der Rückenplatte 2 und von einer zweiten Öffnung 54 in der Verlängerungsplatte 51 gebildet. Die Rückenplatte 2 besitzt eine Ausnehmung 15 zur Aufnahme der Verlängerungsplatte 51. Die Ausnehmung 15 ist im Bereich des oberen Endabschnitts 5 der Rückenplatte angeordnet. Die Ausnehmung 15 ist in Richtung der Längserstreckung 50 der Rückenplatte 2 zu einem oberen Ende 7 der Rückenplatte 2 hin offen ausgebildet. Die Ausnehmung 15 besitzt einen Boden 17. Die erste Öffnung 18 ist im Boden 17 der Ausnehmung 15 angeordnet. Die erste Öffnung 18 durchdringt die Rückenplatte 2 vollständig. Wie die Figuren 2 und 3 zeigen, liegt die erste Öffnung 18 bei montierter Verlängerungsplatte 51 in Überdeckung zu der zweiten durchgehenden Öffnung 54 der Verlängerungsplatte 51. Die erste Öffnung 18 und die zweite Öffnung 54 bilden die gemeinsame Aufnahme 31 für einen Haken.

Die Ausnehmung 15 ist an drei Seiten von einem vorstehenden Rand 23 begrenzt. Der vorstehende Rand 23 steht gegenüber dem Boden 17 der Ausnehmung 15 vor. Der vorstehende Rand 23 ist bündig mit der Rückenseite 10 außerhalb der Ausnehmung 15. Durch den vorstehenden Rand 23 ist eine Stufe in der Rückenseite 10 der Rückenplatte 2 gebildet. Durch die Ausnehmung 15 ist in der Rückenseite 10 eine Vertiefung gebildet, die durch den vorstehenden Rand 23 zumindest teilweise begrenzt ist. Die Ausnehmung 15 ist in Richtung der Längserstreckung 50 am oberen Ende 7 des oberen Endabschnitts 5 der Rückenplatte 2 unbegrenzt.

Wie sich aus den Figuren 2 und 3 ergibt, liegt die montierte Verlängerungsplatte 51 nahe am vorstehenden Rand 23 der Ausnehmung 15, wobei ein kleiner Spalt gebildet ist. Die montierte Verlängerungsplatte 51 kann auch an dem Rand 23 der Ausnehmung 15 anliegen. Es ergibt sich eine stabile Verbindung zwischen der Verlängerungsplatte 51 und Rückenplatte 2 der Rückentrage 1. Die seitlichen Ränder 21, 22 des vorstehenden Rands 23 der Rückenplatte 2 sind über einen oberen Rand 25 der Rückenplatte 2 miteinander verbunden. Der obere Rand 25 begrenzt die Rückenplatte 2 in Richtung der Längserstreckung 50 der Rückenplatte 2. Der obere Endabschnitt 5 weist den oberen Rand 25 auf. Die Ausnehmung 15 ist zum oberen Rand 25 hin offen.

Wie in Fig. 3 dargestellt, ist die Verlängerungsplatte 51 mit Befestigungsmitteln 24 in der Ausnehmung 15 festgelegt; im gezeigten Ausführungsbeispiel sind die Befestigungsmitteln 24 durch Schrauben gebildet, vorzugsweise durch drei Schrauben. Die Verlängerungsplatte 51 kann auch über ein anderes Befestigungsmittel, das eine Translation und Rotation der Verlängerungsplatte 51 gegenüber der Rückenplatte 2 unterbindet, montiert sein. Vorteilhaft ist die Verbindung lösbar, eine Klebung oder Nietung kann zweckmäßig sein.

Die Montage der Verlängerungsplatte 51 erfolgt vorteilhaft einmalig, wenn eine für ein Tragsystem ohne Hüftgurt 120 ausgelegte Rückentrage 1 nun mit einem Tragsystem mit Hüftgurt 120 ausgestattet werden soll. Diese Ausstattung kann initial bereits beim Hersteller der Rückentrage 1 vorgenommen werden oder nachträglich vom Benutzer. Sofern ein Benutzer ohne Hüftgurt 120 arbeiten möchte, kann er eine bereits an die Rückenplatte 2 montierte Verlängerungsplatte 51 demontieren, da die Rückenplatte 2 selbst eine obere Befestigungsstelle für Schultergurte aufweist, in die ein Schultergurt von der alternativen oberen Befestigungsstelle der Verlängerungsplatte 51 umgehängt werden kann. Dadurch stört ein über die Schultern eines Benutzers überstehender und in diesem Anwendungsfall nicht genutzter Teil der Verlängerungsplatte 51 den Benutzer nicht in seiner Bewegungsfreiheit; ferner ist das Gewicht der Rückentrage 2 reduziert.

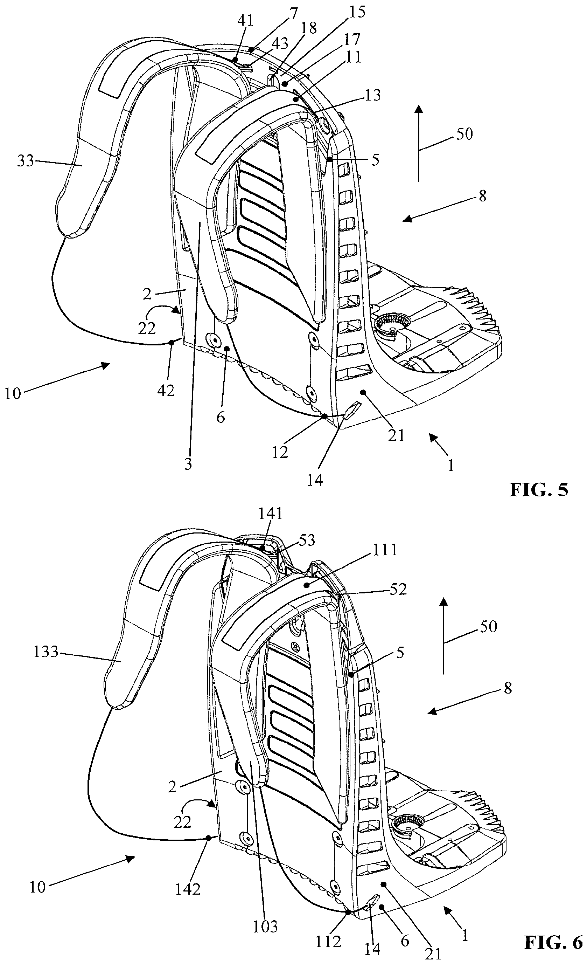

Im Boden 17 der Ausnehmung 15 sind obere Befestigungsstellen 13, 43 angeordnet. Wie in Fig. 5 dargestellt, ist in der oberen Befestigungsstelle 13 ein erster Gurtabschnitt 11 eines kurzen Schultergurts 3 befestigt. In der oberen Befestigungsstelle 43 ist ein erster Gurtabschnitt 41 eines kurzen Schultergurts 33 befestigt. In den Ausführungsbeispielen sind die kurzen Schultergurte 3, 33 bei einer Verwendung der Rückentrage 1 ohne Verlängerungsplatte 51 vorgesehen. Es kann aber auch vorgesehen sein, die kurzen Schultergurte 3, 33 sowohl bei Verwendung der Rückentrage 1 ohne Verlängerungsplatte 2 als auch bei Verwendung der Rückentrage 1 mit Verlängerungsplatte 2 zu verwenden. Ebenso kann vorgesehen sein, die langen Schultergurte 103, 143 sowohl bei Verwendung der Rückentrage 1 mit Verlängerungsplatte 2 als auch bei Verwendung der Rückentrage 1 ohne Verlängerungsplatte 2 zu verwenden. Die Länge der kurzen Schultergurte 3, 33 ist einer in Fig. 8 dargestellten maximalen Länge L der Rückenplatte 2 ohne Verlängerungsplatte 51 angepasst. Die maximale Länge L ist in Richtung der Längserstreckung 50 der Rückenplatte 2 von einem unteren Ende 20 des unteren Endabschnitts 6 der Rückenplatte 2 bis zum oberen Ende 7 des oberen Endabschnitts 5 der Rückenplatte 2 gemessen. Die Länge der langen Schultergurte 103, 133 ist einer in Fig. 8 dargestellten maximalen Länge L2 der Rückenplatte 2 und der Verlängerungsplatte 51 zusammen bei in der Ausnehmung 15 montierter Verlängerungsplatte 51 angepasst. Die Länge L2 ist in Richtung der Längserstreckung 50 vom unteren Ende 20 der Rückenplatte 2 bis zu einem oberen Ende 59 der Verlängerungsplatte 51 gemessen. Der in Fig. 5 dargestellte kurze Schultergurt 3 ist der linken Schulter eines Benutzers zugeordnet. Der kurze Schultergurt 33 ist der rechten Schulter eines Benutzers zugeordnet.

Das untere Ende der Rückenplatte 51 bezeichnet sowohl bei in der Ausnehmung 15 montierter Verlängerungsplatte 51 als auch bei nicht in der Ausnehmung 15 montierter Verlängerungsplatte 51 den gleichen Bereich der Rückenplatte 2. Die Verlängerung der Rückenplatte 2 erfolgt in Längsrichtung nach oben. In Längsrichtung nach unten bleibt die Rückenplatte 2 unverändert, sodass ein sicherer Stand auch im verlängerten Zustand gewährleistet ist. Dadurch, dass die Rückenplatte 51 nach oben hin verlängert wird, verschiebt sich der Schwerpunkt der zu tragenden Last bezüglich des Rückens des Benutzers nicht weiter nach oben. Dadurch ist der Tragekomfort, insbesondere in unebenem Gelände, erhöht. Auch ein sich von der Lastseite auf die Rückenseite der Rückentrage erstreckendes Bedienelement, wie beispielsweise ein an einem Blasrohr angebundener Handgriff eines auf der Rückentrage angeordneten Blasgerätes, ist weiterhin ergonomisch bezüglich eines Arms des Benutzers angeordnet.

Der kurze Schultergurt 3 besitzt einen zweiten Gurtabschnitt 12. Der kurze Schultergurt 33 besitzt einen zweiten Gurtabschnitt 42. Der zweite Gurtabschnitt 12 ist im Ausführungsbeispiel nach Fig. 5 an der unteren Befestigungsstelle 14 der Rückenplatte 2 befestigt. Der zweite Gurtabschnitt 42 ist im Ausführungsbeispiel nach Fig. 5 an der in Fig. 7 dargestellten unteren Befestigungsstelle 44 befestigt.

Wie die Figuren 5 und 6 zeigen, sind die ersten Gurtabschnitte der jeweiligen Schultergurte bei demontierter Verlängerungsplatte 51 an der oberen Befestigungsstelle 13, 43 im Bereich der Ausnehmung 15 festgelegt und bei in der Ausnehmung 15 montierter Verlängerungsplatte 51 an der alternativen Befestigungsstelle 52, 53 auf der Verlängerungsplatte 51 befestigt.

Fig. 7 zeigt die Rückentrage 1 in einer Seitenansicht senkrecht zur Richtung der Längserstreckung 50 auf den seitlichen Rand 22 der Rückenplatte 2. An der Bodenplatte 4 sind Füße 26 ausgebildet. Die Rückentrage 1 kann auf den Füßen 26 der Bodenplatte 4 auf einem ebenen Untergrund abgestellt werden. Ein Abstellen ist sowohl bei montierter Verlängerungsplatte 15 als auch bei demontierter Verlängerungsplatte 51 möglich. Die Füße 26 der Bodenplatte 4 sind in einer Abstellebene E angeordnet. Dadurch, dass die Verlängerungsplatte 51 in die Ausnehmung 15 am oberen Endabschnitt 5 der Rückenplatte 2 eingesetzt werden kann, steht eine durch die Verlängerungsplatte 51 verlängerte Rückenplatte 2 nicht über das untere Ende 20 des unteren Endabschnitts 6 und nicht über die Abstellebene E hervor. Ein Abstellen der Rückentrage 1 auf einem Untergrund ist auch bei in der Rückenplatte 2 montierter Verlängerungsplatte 51 möglich.

Fig. 8 zeigt eine Seitenansicht auf die Rückentrage 1 aus Richtung senkrecht zur Richtung der Längserstreckung 50 der Rückenplatte 2 und in Dickenrichtung auf die Lastseite 8. Die Verlängerungsplatte 51 ist in der in Fig. 8 nicht sichtbaren Ausnehmung 15 montiert. Die Verlängerungsplatte 51 steht über das obere Ende 7 der Rückenplatte 2 in Richtung der Längserstreckung 50 der Rückenplatte 2 hervor. Die maximale Länge L2 der Rückenplatte 2 mit der Verlängerungsplatte 51 ist größer als die maximale Länge L der Rückenplatte 2 allein. Im Ausführungsbeispiel nach Fig. 8 beträgt die maximale Länge L2 mindestens 110% der maximalen Länge L.

Wie sich aus den Figuren 2 und 3 ergibt, verdeckt die montierte Verlängerungsplatte 51 die im Boden 17 der Ausnehmung 15 angeordneten oberen Befestigungsstellen 13, 43 auf der Rückenseite 10 der Rückenplatte 2. Wie in Fig. 8 dargestellt, sind die oberen Befestigungsstellen 13, 43 bei montierter Verlängerungsplatte 51 auf der Lastseite 8 der Rückenplatte 2 von Bestandteilen der Rückentrage 1 selbst unverdeckt.

Bei Verwendung der Rückentrage 1 mit einem Hüftgurt 120 ist der Hüftgurt 120 im unteren Endabschnitt der Rückenplatte 2 angeordnet. Bei Verwendung der Rückentrage 1 ohne Hüftgurt 120 ist im unteren Endabschnitt vorteilhaft ein Anlagepolster vorgesehen. Die Rückentrage 2 liegt mit und ohne montierte Verlängerungsplatte 51 mit demselben unteren Endabschnitt der Rückenplatte 2 mittelbar oder unmittelbar am Benutzer an.

Die oberen Befestigungsstellen 13, 43 der Rückenplatte 2 weisen einen in Richtung der Längserstreckung 50 gemessenen ersten Abstand d1 zum unteren Ende 20 des unteren Endabschnitts 6 der Rückenplatte 2 auf. Der erste Abstand d1 ist der kleinste Abstand der oberen Befestigungsstellen 13, 43 zum unteren Ende 20. Bei in der Ausnehmung 15 montierter Verlängerungsplatte 51 weisen die alternativen Befestigungsstellen 42, 43 der Verlängerungsplatte 51 einen in Richtung der Längserstreckung 50 der Rückenplatte 2 gemessenen zweiten Abstand d2 zum unteren Ende 20 des unteren Endabschnitts 6 der Rückenplatte 2 auf. Der zweite Abstand d2 ist der kleinste Abstand der alternativen Befestigungsstellen 52, 53 zum unteren Ende 20. Der zweite Abstand d2 ist größer als der erste Abstand dl. Die oberen Befestigungsstellen 13, 43 der Rückenplatte 2 liegen unterhalb der alternativen Befestigungsstellen 52, 53. Sowohl die zweiten Gurtabschnitte 12, 42 der kurzen Schultergurte 3, 33, als auch die zweiten Gurtabschnitte 112, 142 der langen Schultergurte 103, 133 werden an denselben, in den Figuren 1 und 7 dargestellten unteren Befestigungsstellen 14, 44 der Rückenplatte 2 befestigt. Die Position der unteren Befestigungsstellen auf der Rückenplatte 2 für die Schultergurte ist im Ausführungsbeispiel dieselbe, unabhängig einer Verwendung der Rückentrage 1 mit und ohne montierter Verlängerungsplatte 51. Dadurch vergrößert sich bei montierter Verlängerungsplatte 51 auch der Abstand zwischen den einem Schultergurt zugeordneten Befestigungsstellen. Die unteren Befestigungsstellen können auch voneinander abweichen. Dadurch ist die Rückenfläche der Rückentrage 1 am Rücken eines Benutzers bei montierter Verlängerungsplatte 51 größer als ohne Verlängerungsplatte 51. Durch die Montage der Verlängerungsplatte 51 ist eine Anpassung der Rückentrage 1 an eine andere Körpergröße eines Benutzers möglich. Zur Befestigung des Anlagepolsters können die gleichen Befestigungspunkte benutzt werden wie zur Befestigung des Hüftgurtes 120. Die Anzahl an Befestigungspunkten in der Rückenplatte 2 ist dadurch reduziert und eine Fehlmontage ausgeschlossen. Der Hüftgurt 120 kann vorteilhaft teilweise durch das Anlagepolster selbst gebildet sein.

Im Ausführungsbeispiel nach Fig. 8 ist der erste Gurtabschnitt 111 des langen Schultergurts 103 in der alternativen Befestigungsstelle 52 der Verlängerungsplatte 51 befestigt. Analog hierzu ist der erste Gurtabschnitt 141 des langen Schultergurts 133 in der alternativen Befestigungsstelle 53 der Verlängerungsplatte 51 befestigt. Die alternativen Befestigungsstellen 52, 53 der Verlängerungsplatte 51 und die oberen Befestigungsstellen 13, 43 der Rückenplatte 2 sind schlitzförmig ausgebildet. Die Schlitze der Befestigungsstellen 13, 43, 113, 143 besitzen jeweils eine Länge und eine Breite. Zur Befestigung des ersten Gurtabschnitts 111 und des Schultergurts 103 ist das Befestigungselement 113 des ersten Gurtabschnitts 111 des langen Schultergurts 103 durch die schlitzförmige alternative Befestigungsstelle 52 gesteckt. Das Befestigungselement 113 ist am Ende des ersten Gurtabschnitts 111 des langen Schultergurts 103 angeordnet. Das Befestigungselement 113 hat die Form einer im Wesentlichen rechteckigen Platte mit einer Länge, eine Breite und einer Dicke. Die Länge ist größer als die Breite, und die Breite und die Länge sind größer als die Dicke. Die Dicke des Befestigungselements 113 ist kleiner als die Breite der schlitzförmigen alternativen Befestigungsstelle 52. Die Länge des plattenförmigen Befestigungselements 113 ist kleiner als die Länge der schlitzförmigen alternativen Befestigungsstelle 52. Die Breite des plattenförmigen Befestigungselements 113 ist größer als die Breite der schlitzförmigen alternativen Befestigungsstelle 52. Dadurch lässt sich das plattenförmige Befestigungselement 113 mit seiner Schmalseite durch die schlitzförmige Befestigungsstelle 52 stecken und dann derart verdrehen, dass die Breitseite des plattenförmigen Befestigungselements 113 nicht durch die schlitzförmige alternative Befestigungsstelle 52 passt. In analoger Weise ist am Ende des ersten Gurtabschnitts 141 des langen Schultergurts 133 ein plattenförmiges Befestigungselement 143 angebracht. Das plattenförmige Befestigungselement 143 ist analog zum plattenförmigen Befestigungselement 113 ausgebildet. Ebenso ist die schlitzförmige alternative Befestigungsstelle 53 analog zur schlitzförmigen alternativen Befestigungsstelle 52 ausgebildet. Auch die in der Zeichnung nicht dargestellte Befestigung der ersten Gurtabschnitte 11, 41 der kurzen Schultergurte 3, 33 in den oberen Befestigungsstellen 13, 43 erfolgt in analoger Weise zur Befestigung der ersten Gurtabschnitte 113, 43 der langen Schultergurte 111, 133 in den alternativen Befestigungsstellen 52, 53 der Verlängerungsplatte 51.

Die schlitzförmigen Befestigungsstellen 43 und 53 und die schlitzförmigen Befestigungsstellen 13 und 52 sind jeweils bezüglich ihrer Längserstreckung im gleichen Winkel zur Richtung der Längserstreckung 50 orientiert. Durch die Montage der Verlängerungsplatte 51 sind die beiden oberen Befestigungsstellen 13, 43 in der Rückenplatte 2 für die Schultergurte durch zwei alternative Befestigungsstellen 52, 53 ersetzt. Im Vergleich zu den oberen Befestigungsstellen 13, 43 sind die alternativen Befestigungsstellen 52, 53 um eine in Richtung der Längserstreckung 50 der Rückenplatte 2 gemessene Verschiebungslänge vl nach oben verschoben. Die Verschiebungslänge vl beträgt in den Ausführungsbeispielen mindestens 5 cm. Die Verschiebungslänge vl entspricht der Differenz zwischen dem Abstand d2 und dem Abstand d1. Die schlitzförmigen Befestigungsstellen 43 und 53 und die schlitzförmigen Befestigungsstellen 13 und 52 weisen jeweils einen festen Abstand zueinander auf.

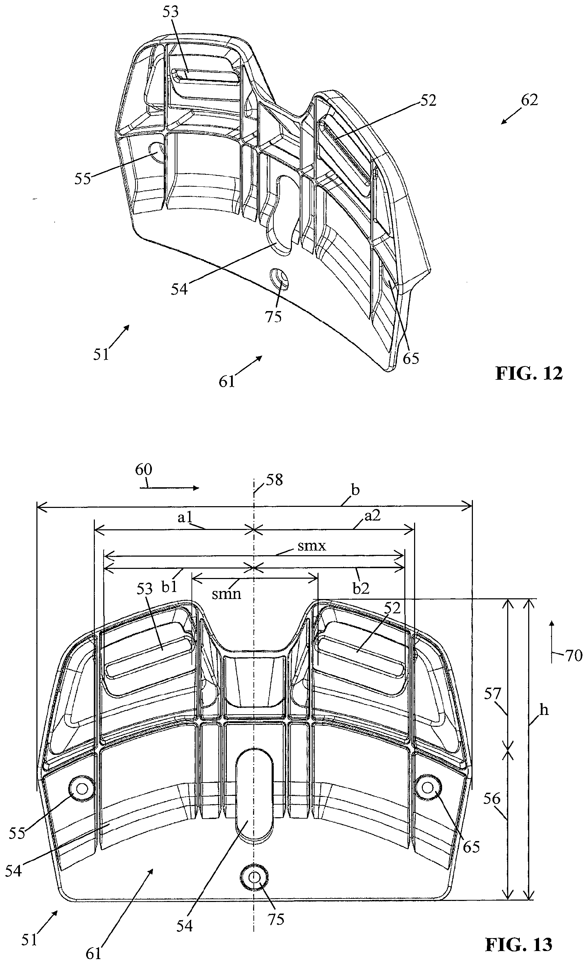

Die Rückenplatte 2 weist eine senkrecht zur Längserstreckung 50 der Rückenplatte 2 vom seitlichen Rand 21 der Rückenplatte 2 zum seitlichen Rand 22 der Rückenplatte 2 gemessene Seitenbreite sb auf. Die Verlängerungsplatte 51 weist eine in den Figuren 8 und 13 dargestellte Breite b auf. Im in Fig. 8 gezeigten montierten Zustand der Verlängerungsplatte 51 ist die Breite b senkrecht zur Längserstreckung 50 der Rückenplatte 2 und in Richtung vom seitlichen Rand 21 der Rückenplatte 2 zum seitlichen Rand 22 der Rückenplatte 2 gemessen. Die Breite b der Verlängerungsplatte 51 beträgt vorteilhaft mindestens zwei Drittel der Seitenbreite sb der Rückenplatte 2.

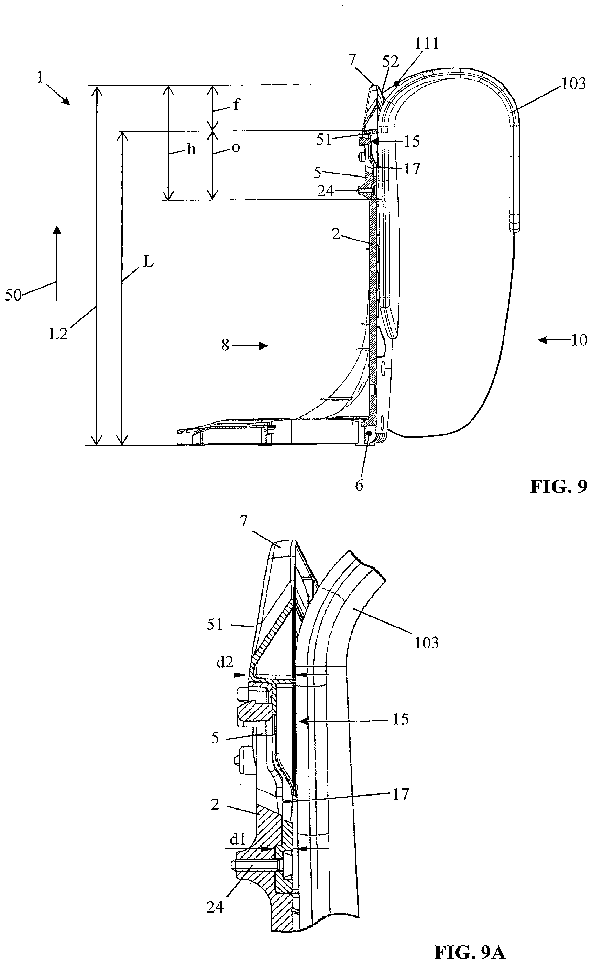

Fig. 9 zeigt einen Schnitt durch die Längsmittelachse der Rückentrage 1 entlang der Schnittlinie IX-IX in Fig. 8. Wie auch in Fig. 13 dargestellt, besitzt die Verlängerungsplatte 51 eine maximale Höhe h. Bei in der Ausnehmung 15 der Rückenplatte 2 montierter Verlängerungsplatte 51 ist die maximale Höhe h, wie in Fig. 9 gezeigt, in Richtung der Längserstreckung 50 der Rückenplatte 2 gemessen. Die Verlängerungsplatte 51 und die Rückenplatte 2 überlappen einander in Richtung der Längserstreckung 50 der Rückenplatte 2. Die Verlängerungsplatte 51 und die Rückenplatte 2 weisen eine gemeinsame Überlappungslänge o auf. Die Überlappungslänge o ist in Richtung der Längserstreckung 50 der Rückenplatte 2 gemessen. Die Überlappungslänge o ist eine Teillänge der maximalen Höhe h der Verlängerungsplatte 51. Die Verlängerungsplatte 51 liegt mit mindestens einem Viertel ihrer maximalen Höhe h an der Rückenplatte 2 an. Dementsprechend beträgt die Überlappungslänge o der Verlängerungsplatte 51 und der Rückenplatte 2 mindestens ein Viertel der maximalen Höhe h der Verlängerungsplatte 51. Im Ausführungsbeispiel nach Fig. 9 ist die Überlappungslänge o größer als die Hälfte der maximalen Höhe h.

Im montierten Zustand weist die Verlängerungsplatte 51 eine freie Länge f auf. Die freie Länge f ist in Richtung der Längserstreckung 50 der Rückenplatte 2 gemessen. Die freie Länge f ist eine Teillänge der maximalen Höhe h der Verlängerungsplatte 51. Die Verlängerungsplatte 51 überragt die Rückenplatte 2 um die freie Länge f. Die freie Länge f entspricht der Differenz zwischen der maximalen Höhe h und der Überlappungslänge o. Die freie Höhe f entspricht der Differenz zwischen der maximalen Länge L2 und der maximalen Länge L. Im Ausführungsbeispiel nach Fig. 9 beträgt die freie Länge f mindestens ein Viertel der maximalen Höhe h der Verlängerungsplatte 51.

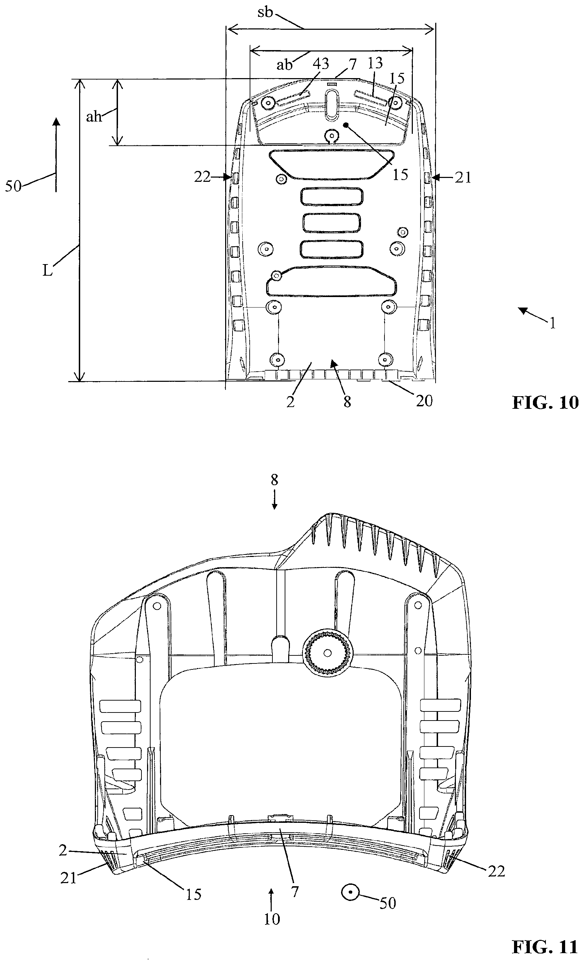

Fig. 10 zeigt die Draufsicht auf die Rückenseite 8 der Rückenplatte 2 aus Richtung senkrecht zur Richtung der Längserstreckung 50 der Rückenplatte 2 bei demontierter Verlängerungsplatte 51. Die Ausnehmung 15 weist eine senkrecht zur Längserstreckung 50 der Rückenplatte 2 in Richtung vom seitlichen Rand 21 der Rückenplatte 2 zum seitlichen Rand 22 der Rückenplatte 2 gemessene Ausnehmungsbreite ab auf. Die Ausnehmungsbreite ab beträgt mindestens zwei Drittel der in gleicher Richtung gemessenen Seitenbreite sb der Rückenplatte 2. Die Ausnehmung 15 besitzt eine in Richtung der Längserstreckung 50 der Rückenplatte 2 gemessene Ausnehmungshöhe ah. Die Ausnehmungshöhe ah ist mindestens so groß wie die Überlappungslänge o der Verlängerungsplatte 51 und der Rückenplatte 2. Die Ausnehmungsbreite ab ist mindestens so groß wie die Breite b der Verlängerungsplatte 51. Dadurch ist sichergestellt, dass die Verlängerungsplatte 51 in die Ausnehmung 15 passt. In den Ausführungsbeispielen sind die Ausnehmungsbreite ab bzw. die Ausnehmungshöhe ah nur unwesentlich größer als die Überlappungslänge o bzw. die maximale Höhe h. Auf diese Weise kann die Verlängerungsplatte 51 sicher und stabil in der Ausnehmung 15 der Rückenplatte 2 fixiert sein.

Fig. 11 zeigt eine Draufsicht auf das obere Ende 7 der Rückenplatte 2 entgegen der Richtung der Längserstreckung 50 der Rückenplatte 2. Die Rückenplatte 2 verläuft gewölbt. Die Rückenplatte 2 ist um die Richtung der Längserstreckung 50 der Rückenplatte 2 herum gewölbt. Die Rückenplatte 2 ist mit ihren seitlichen Rändern 21, 22 zur Rückenseite 10 der Rückenplatte 2 hin gebogen. Dadurch ist die Form der Rückenplatte 2 zumindest teilweise der Form eines Rückens eines Benutzers angepasst.

Fig. 12 zeigt eine perspektivische Darstellung der Verlängerungsplatte 51. Die Verlängerungsplatte 51 weist ein erstes Anbindungselemente 55, ein zweites Anbindungselement 65 und ein drittes Anbindungselement 75 auf. Die Anbindungselemente 55, 65, 75 sind im Wesentlichen als durchgehende Öffnungen in der Verlängerungsplatte 51 ausgebildet. Insbesondere die Ränder dieser durchgehenden Öffnungen dienen bei der Befestigung der Verlängerungsplatte 51 an der Rückenplatte 2 als Anbindungselemente 55, 65, 75. Wie in den Figuren 2 und 3 dargestellt, werden zur Befestigung der Verlängerungsplatte 51 in der Ausnehmung 15 der Rückenplatte 2 als Schrauben ausgebildete Befestigungsmittel 24 durch die Öffnungen der Verlängerungsplatte 51 gesteckt und bewirken gemeinsam mit den Anbindungselementen 55, 65, 75 eine Befestigung der Verlängerungsplatte 51 an der Rückenplatte 2. Die Verlängerungsplatte 51 weist eine Rückenseite 61 und eine Lastseite 62 auf. Im montierten Zustand der Verlängerungsplatte 51 ist die Rückenseite 61 der Verlängerungsplatte 51 auf der Rückenseite 10 der Rückenplatte 2 angeordnet und ist die Lastseite 62 der Verlängerungsplatte 51 auf der Lastseite 8 der Rückenplatte 2 angeordnet.

Fig. 13 zeigt eine Draufsicht auf die Rückenseite 61 der Verlängerungsplatte 51. Die Verlängerungsplatte 51 weist mindestens zwei alternative Befestigungsstellen 52, 53 auf. Ein in Richtung der Breite b der Verlängerungsplatte 51 gemessener maximaler Abstand smx zwischen den beiden Befestigungsstellen 52, 53 entspricht mindestens zwei Dritteln der Breite b der Verlängerungsplatte 51. Der maximale Abstand smx entspricht dem größten Abstand, den Punkte der als schlitzförmige, durchgehende Öffnung ausgebildeten alternativen Befestigungsstelle 52 von Punkten der als schlitzförmige, durchgehende Öffnung ausgebildeten alternativen Befestigungsstelle 53 besitzen. Der maximale Abstand smx zwischen den beiden Befestigungsstellen 52, 53 beträgt mindestens 15 cm. Die alternative Befestigungsstelle 52 besitzt einen minimalen Abstand smn von der alternativen Befestigungsstelle 3. Im Ausführungsbeispiel nach Fig. 13 beträgt der minimale Abstand smn weniger als die Hälfte des maximalen Abstands smx. Der minimale Abstand smn ist größer als ein Viertel der Breite b.

Die Verlängerungsplatte 51 ist starr und einteilig ausgebildet. Die Breite b der Verlängerungsplatte 51 erstreckt sich in einer als Breitenrichtung 60 bezeichneten Raumrichtung. Die Breite b ist die größte Ausdehnung der Verlängerungsplatte 51. Die maximale Höhe h ist in einer senkrecht zur Breitenrichtung 60 gemessenen Höhenrichtung 70 gemessen. Die Breite b der Verlängerungsplatte 51 ist größer als die Höhe h der Verlängerungsplatte 51.

Die Höhenrichtung 70 verläuft senkrecht zur Breitenrichtung 60 und erstreckt sich von den Anbindungselementen 55, 65, 75 zu den Befestigungsstelle 52, 53 und. Die drei Anbindungselemente 55, 65, 75 sind in einer unteren Hälfte 56 der maximalen Höhe h angeordnet. Die Befestigungsstellen 52, 53 sind in einer oberen Hälfte 57 der Höhe h angeordnet. Die Verlängerungsplatte 51 besitzt eine Mittelebene 58, die sich senkrecht zur Breitenrichtung 60 erstreckt. Im Ausführungsbeispiel nach Fig. 13 ist die Mittelebene 58 eine Symmetrieebene der Verlängerungsplatte 51. Das erste Anbindungselement 55 besitzt einen minimalen Abstand a1 zur Mittelebene 58. Das zweite Anbindungselement besitze einen minimalen Abstand a2 zur Mittelebene 58. Der minimale Abstand a1 ist im Ausführungsbeispiel gleich groß wie der minimale Abstand a2. Die alternative Befestigungsstelle 53 besitzt einen maximalen Abstand b1 zur Mittelebene 58. Die alternative Befestigungsstelle 52 besitzt einen maximalen Abstand b2 zur Mittelebene 58. Der maximale Abstand b1 ist im Ausführungsbeispiel gleich groß wie der maximale Abstand b2. Die Summe der maximalen Abstände b1 und b2 entspricht dem maximalen Abstand smx der der beiden Befestigungselement 52, 53. Der minimale Abstand a1 des ersten Anbindungselements 55 zur Mittelebene 58 ist größer als der maximale Abstand b1 der alternativen Befestigungsstelle 53 zur Mittelebene 58. Der minimale Abstand a2 des zweiten Anbindungselements 65 zur Mittelebene 58 ist größer als der maximale Abstand b2 der alternativen Befestigungsstelle 52 zur Mittelebene 58. Dadurch, dass die Abstände a1 und a2 jeweils größer als die Abstände b1 und b2 sind, kann die Verlängerungsplatte 51 auf stabile Weise an einer Rückenplatte einer Rückentrage befestigt werden und gleichzeitig sind in den alternativen Befestigungsstellen 52, 53 befestigte Schultergurt stabil gehalten.

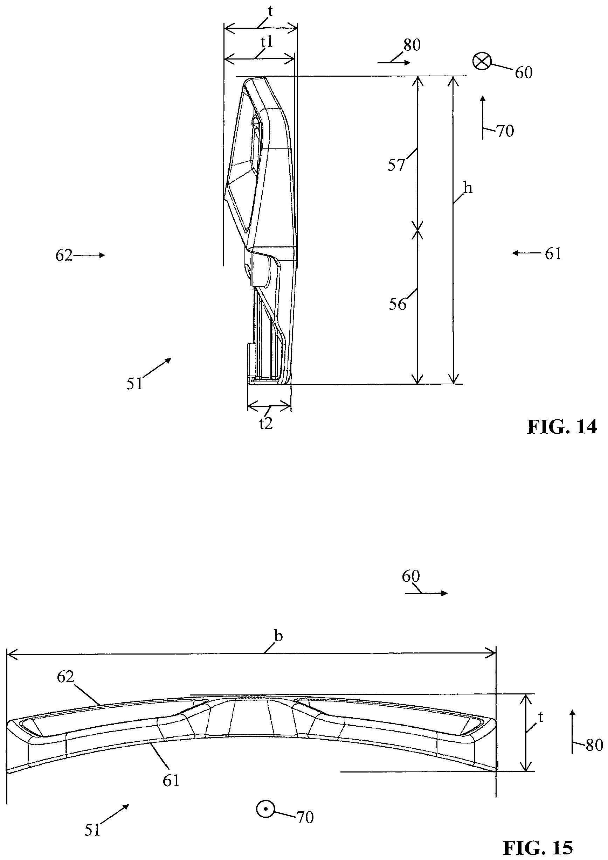

Fig. 14 zeigt eine Seitenansicht der Verlängerungsplatte 51 aus Richtung der Breitenrichtung 60 der Verlängerungsplatte 51. Die Verlängerungsplatte 51 weist eine Dickenrichtung 80 auf. Die Dickenrichtung 80 verläuft senkrecht zur Höhenrichtung 70 und senkrecht zur Breitenrichtung 60. Die Dickenrichtung 80 verläuft von der Lastseite 62 zur Rückenseite 61 der Verlängerungsplatte 51. Die Verlängerungsplatte 51 weist eine in der Dickenrichtung 80 gemessene maximale Dicke t auf. Die Höhe h ist größer als die maximale Dicke t.

Die Verlängerungsplatte 51 weist in der oberen Hälfte eine erste Dicke t1 auf. Die Verlängerungsplatte 51 weist in der unteren Hälfte 56 eine zweite Dicke t2 auf. Die erste Dicke t1 ist größer als die zweite Dicke t2. Dadurch kann die Verlängerungsplatte 51 in eine Ausnehmung der Rückenplatte 2 einer Rückentrage 1 eingesetzt sein, wobei der dickere Teil der oberen Hälfte 57 über die Rückenplatte 2 der Rückentrage 1 hinausragen kann und die Rückenplatte 2 mit gleicher Dicke fortsetzt, welche die Rückenplatte 2 an dieser Stelle außerhalb der Ausnehmung 15 besitzt. Die Verlängerungsplatte 51 stützt sich mit ihrem dickeren Teil am oberen Rand der Rückenplatte 2 ab. Der in der Ausnehmung 15 befindliche Teil der Verlängerungsplatte 51 besitzt eine geringere Ausdehnung d1 in Dickenrichtung als die Ausdehnung d2 des außerhalb der Ausnehmung 15 angerordneten Teils der Verlängerungsplatte 51.

Fig. 15 zeigt eine Ansicht auf die Oberseite der Verlängerungsplatte 51 entgegen der Höhenrichtung 70. Die Verlängerungsplatte 51 ist um die Höhenrichtung 70 herum zur Rückenseite 61 hin gewölbt. Dadurch ist die Verlängerungsplatte 51 zumindest teilweise an die Form des Rückens eines Benutzers angepasst. Dadurch kann die Verlängerungsplatte 51 die Form der Rückenseite einer Rückenplatte einer Rückentrage mit derselben Wölbung fortsetzen.

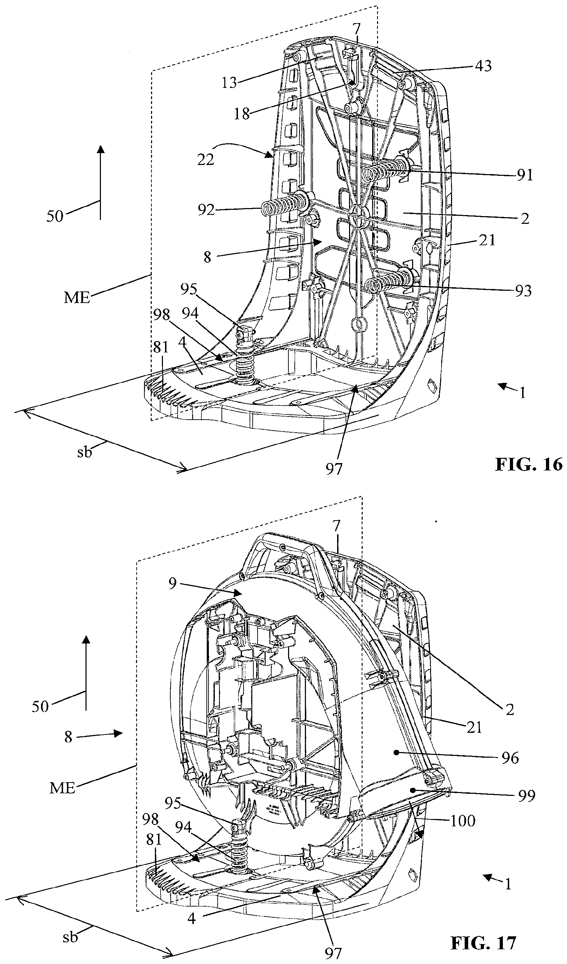

Fig. 16 zeigt ein weiteres Ausführungsbeispiel für eine Rückentrage 1 in perspektivischer Darstellung mit Blick auf die Lastseite 8 der Rückentrage 1. Zur Lagerung und Verbindung der in Fig. 16 nicht dargestellten Last 9 sind auf der Lastseite 8 drei als Halter ausgebildete Antivibrationselemente in Form von Horizontalfedern 91, 92, 93 und eine Vertikalfeder 94 angeordnet. Die Vertikalfeder 94 erstreckt sich in Richtung der Längserstreckung 50 der Rückenplatte 2 der Rückentrage 1 und ist mit ihrem unteren Ende an der lastzugewandten Seite der Bodenplatte 4 festgelegt.

Die Rückentrage 1 besitzt eine in den Fig. 16 bis 18 mit gestrichelter Linie als Rechteck eingezeichnete Mittelebene ME. Die Mittelebene ME verläuft senkrecht zur Richtung der Seitenbreite sb, die sich zwischen dem seitlichen Rand 21 und dem seitlichen Rand 22 erstreckt. Die Mittelebene ME teilt die Seitenbreite sb in zwei gleich große Hälften. Die Mittelebene ME teilt die Rückentrage 1 in Richtung der Seitenbreite sb gesehen in eine erste Hälfte 97 und in eine zweite Hälfte 98. Die beiden Hälften 97 und 98 sind unterschiedlich gestaltet. Die erste Hälfte 97 ist dem seitlichen Rand 21 und die zweite Hälfte 98 ist dem seitlichen Rand 22 zugeordnet. Die Vertikalfeder 94 ist in der zweiten Hälfte 98 der Rückentrage 1 angeordnet.

Wie in Fig. 16 dargestellt, sind die als Halter ausgebildeten Antivibrationselemente in Form von Horizontalfedern 91, 92, 93 mit ihrem einen Ende an der Rückenplatte 2 der Rückentrage 1 festgelegt. Die Horizontalfedern 91, 92, 93 erstrecken sich in Richtung senkrecht zur Richtung der Längserstreckung 50 und in Richtung senkrecht zur Richtung der Seitenbreite sb. Die beiden Horizontalfedern 91, 93 sind in der ersten Hälfte 97 der Rückentrage 1 angeordnet. Die Horizontalfeder 92 ist in der zweiten Hälfte 98 der Rückentrage 1 angeordnet.

Die Anordnung der als Halter ausgebildeten Antivibrationselemente in Form von Horizontalfedern 91, 92, 93 ist auf der Rückenplatte 2 asymmetrisch bezüglich deren Mittelebene. Die Anordnung der Antivibrationselemente ist auf der Bodenplatte 4 asymmetrisch bezüglich deren Mittelebene. Die Anzahl an Antivibrationselementen pro Hälfte ist gleich.

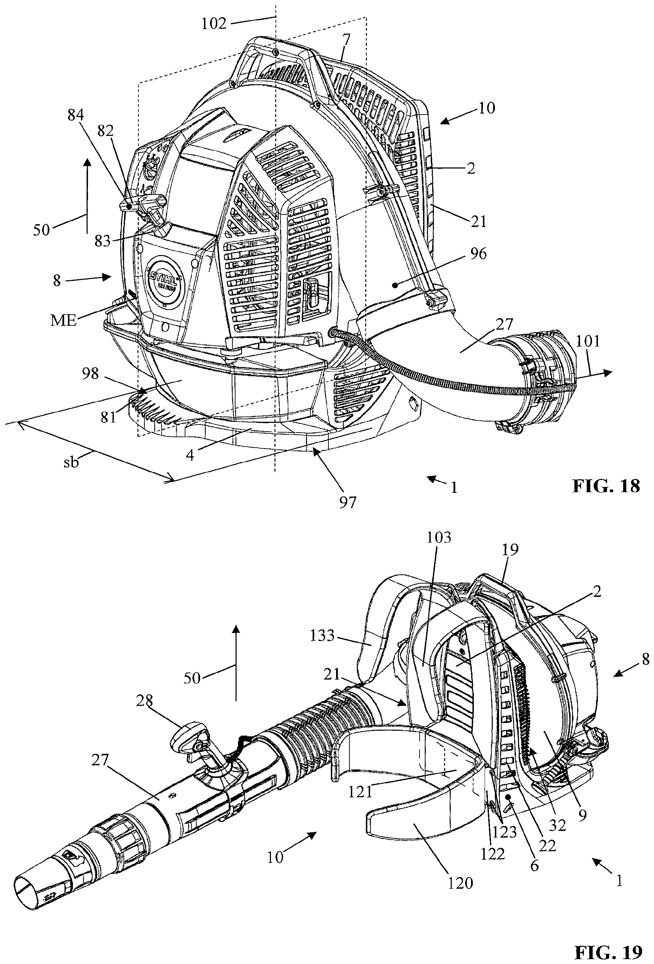

Wie in Fig. 17 dargestellt, besitzt das Gehäuse 96 der als Blasgerät ausgebildeten Last 9 eine Ausgangsöffnung 99. Die Ausgangsöffnung 99 ist auf der Seite der Mittelebene ME der Rückentrage 2 angeordnet, auf der sich die erste Hälfte 97 der Rückentrage 1 befindet. An der Ausgangsöffnung 99 tritt die von der im Gehäuse 96 angeordneten Motoreinheit erzeugte Blasluft in das in Fig. 18 dargestellte Blasrohr 27 über. An der Ausgangsöffnung 99 strömt die Blasluft in einer Ausblasrichtung 100. Die Ausblasrichtung 100 ist nach unten, vom oberen Ende 7 der Rückenplatte 2 weg gerichtet. Durch die an der Ausgangsöffnung 99 ausströmende Blasluft wirkt auf das Gehäuse 96 ein Drehmoment. Das Drehmoment erzeugt in der ersten Hälfte 97 im Wesentlichen eine Kraft auf das Gehäuse 96, die nach oben, in Richtung des oberen Endes 7 der Rückenplatte 2 gerichtet ist. In der zweiten Hälfte 98 ist die durch das Drehmoment auf das Gehäuse 96 wirkende Kraft nach unten, in Richtung auf die Bodenplatte 4 gerichtet. Die asymmetrische Anordnung der Vertikalfeder 94 an der Bodenplatte 4 ist an diese Kräfteverteilung angepasst und nimmt die Kräfte optimal auf. Wie in Fig. 17 dargestellt, ist das obere, lastzugewandte Ende der Vertikalfeder 94 über ein Verbindungselement 95 mit dem Gehäuse 96 der Last 9 verbunden.

Wie in Fig. 18 dargestellt, wird die Blasluft im Blasrohr 27 hauptsächlich in eine Blasrichtung 101 geblasen. Die Blasrichtung 101 ist bei üblicher Benutzung des Blasrohrs 27 quer zur Richtung der Längserstreckung 50 und quer zur Richtung der Seitenbreite sb, in Richtung weg von der Rückenseite 10 der Rückenplatte 2 orientiert. Durch die in Blasrichtung 101 strömende Blasluft wirkt ein Drehmoment um eine in Richtung der Längserstreckung 50 in der Mittelebene ME verlaufende Drehachse 102 auf das Gehäuse 96 der Last 9. Dieses Drehmoment wird im Wesentlichen von den an der Rückenplatte 2 asymmetrisch bezüglich deren Mittelebene angeordneten Horizontalfedern 91, 92, 93 aufgenommen. Dadurch, dass die Antivibrationselemente an der Bodenplatte 4 und der Rückenplatte 2 bezüglich deren Mittelebene asymmetrisch angeordnet sind, erfolgt eine gleichmäßige Abfederung der durch das Drehmoment erzeugten Schwingung des Gehäuses 96 um die Drehachse 102.

Fig. 18 zeigt das vollständige Gehäuse 96 des Blasgeräts. Das Blasgerät besitzt einen Seilzugstarter 82 zum Starten des Motors der Motoreinheit. Der Seilzugstarter 82 wird über einen Griff 84 bedient. Der Griff 84 ragt aus einer Öffnung 83 des Gehäuses 96 aus dem Gehäuse 96 heraus. Die Öffnung 96 ist auf der Seite der Mittelebene ME angeordnet, in der sich die zweite Hälfte 98 der Rückentrage 1 befindet. Die Öffnung 96 ist auf der gleichen Hälfte angeordnet wie das einzige an der Bodenplatte 4 angeordnete Antivibrationselement. Dadurch ist ein Kippen um dieses Antivibrationselement beim Starten vermieden.

Zum Starten wird die auf der Rückentrage 1 festgelegte Motoreinheit auf möglichst ebenem Boden abgestellt. Hierbei steht die Einheit 32, bestehend aus Rückentrage 1 und Last 9, wobei die Last 9 die Motoreinheit umfasst, auf der lastabgewandten Seite der Bodenplatte 4 auf dem Boden. Um den Seilzugstarter 82 über den Griff 84 nach oben anreißen zu können, muss die Einheit 32 auf dem Boden gehalten werden. Hierzu dient ein Tritt 81. Der Tritt 81 ist an der Bodenplatte 4 der Rückentrage 1 ausgebildet. Der Tritt 81 steht in Richtung senkrecht zur Richtung der Längserstreckung 50 und senkrecht zur Richtung der Seitenbreite sb über das Gehäuse 96 über. Die Öffnung 83 des Gehäuses 96 für den Seilzugstarter 82 ist in Richtung der Längserstreckung 50 unmittelbar über dem Tritt 81 angeordnet. Dadurch können die beim Anreißen des Seilzugstarters 82 entstehenden Kräfte auf die Einheit 32 durch Belastung des Tritts 81 mit einem Fuß des Benutzers sehr effektiv aufgenommen und kompensiert werden.

Fig. 19 zeigt eine schematische, perspektivische Darstellung der Einheit 32 mit Blick auf die Rückenseite 10 der Rückenplatte 2 der Rückentrage 1. Im unteren Endabschnitt 6 der Rückenplatte 2 ist auf der Rückenseite 10 ein Hüftgurt 120 angeordnet. Der Hüftgurt 120 besitzt auf seiner der Rückenplatte 2 zugewandten Seite ein Tasche 121. Die Tasche 121 ist in Fig. 19 verdeckt und gestrichelt eingezeichnet. Die Tasche 121 besitzt zwei sich gegenüberliegende Öffnungen. Die eine der beiden Öffnungen öffnet zum seitlichen Rand 21, die andere zum seitlichen Rand 22 der Rückenplatte 2 hin. Durch die beiden Öffnungen ragt jeweils ein Ende einer Befestigungsplatte 122 aus der Tasche 121 heraus. Die Befestigungsplatte 122 ist in Fig. 19 teilweise verdeckt und daher teilweise gestrichelt eingezeichnet. Die Befestigungsplatte 122 besitzt eine Längsrichtung, die sich vom seitlichen Rand 21 zum seitlichen Rand 22 erstreckt. In der Mitte ihrer Längserstreckung weist die Befestigungsplatte 122 eine Verjüngung ihrer Ausdehnung in Richtung der Längserstreckung 50 auf. An den Enden der Längserstreckung der Befestigungsplatte 122 ist die Befestigungsplatte 122 über Befestigungselemente 123 mit dem unteren Endabschnitt 6 der Rückenplatte 2 der Rückentrage 1 verbunden. Im Ausführungsbeispiel nach Fig. 19 sind die Befestigungselemente 123 Schrauben. Die Befestigungselemente sind vom Hüftgurt 120 überdeckt. Dadurch kommt der Benutzer beim Tragen der Rückentrage 1 nicht in unmittelbaren Kontakt mit den Befestigungselementen 123 des Hüftgurts 120. Zwischen Benutzer und Befestigungselementen 123 ist der Hüftgurt 120 angeordnet. Dies erhöht den Tragekomfort.

## Patentansprüche

1. Rückentrage umfassend eine Rückenplatte (2) und mindestens einen Schultergurt (3, 33, 103, 133), wobei die Rückenplatte (2) eine Längserstreckung (50) aufweist und in Richtung ihrer Längserstreckung (50) einen oberen Endabschnitt (5) und einen unteren Endabschnitt (6) besitzt, wobei der obere Endabschnitt (5) bis an das obere Ende (7) der Rückenplatte (2) reicht, und die Rückenplatte (2) eine Lastseite (8) aufweist, die einer zu tragenden Last (9) zugewandt ist und die Rückenplatte (2) eine Rückenseite (10) aufweist, die einem Rücken eines Benutzers zugewandt ist, wobei der Schultergurt (3, 33, 103, 133) auf der Rückenseite (10) verläuft, und der Schultergurt (3, 33, 103, 133) mit einem ersten Gurtabschnitt (11, 41, 111, 141) im Bereich des oberen Endabschnitts (5) an einer oberen Befestigungsstelle (13, 43) und mit einem zweiten Gurtabschnitt (12, 42, 112, 142) im Bereich des unteren Endabschnitts (6) an einer unteren Befestigungsstelle (14, 44) befestigt ist, wobei die Rückenplatte (2) im Bereich des oberen Endabschnitts (5) eine Ausnehmung (15) zur Aufnahme einer Verlängerungsplatte (51) aufweist, und wobei die Ausnehmung (15) in Richtung der Längserstreckung (50) der Rückenplatte (2) zum oberen Ende (7) der Rückenplatte (2) hin offen ausgebildet ist, wobei die Ausnehmung (15) einen Boden (17) besitzt, wobei die Ausnehmung (15) einen gegenüber dem Boden (17) vorstehenden Rand (23) besitzt, wobei seitliche Ränder des vorstehenden Rands (23) über einen oberen Rand (25) der Rückenplatte (2) miteinander verbunden sind, wobei der vorstehende Rand (23) bündig mit der Rückenseite (10) außerhalb der Ausnehmung (15) ist und durch den vorstehenden Rand (23) eine Stufe in der Rückenseite (10) der Rückenplatte (2) gebildet ist, wobei die Ausnehmung (15) eine senkrecht zur Längserstreckung (50) der Rückenplatte (2) gemessene Ausnehmungsbreite (ab) aufweist, und wobei die Ausnehmungsbreite (ab) mindestens zwei Drittel einer in gleicher Richtung gemessenen Seitenbreite (sb) der Rückenplatte (2) beträgt.

2. Rückentrage nach Anspruch 1, wobei die Rückentrage (1) zusätzlich eine Verlängerungsplatte (51) umfasst, wobei die Rückentrage (1) wahlweise mit oder ohne die Verlängerungsplatte (51) benutzt werden kann, und wobei der erste Gurtabschnitt (11, 41, 111, 141) des Schultergurtes (3, 33, 103, 133) bei demontierter Verlängerungsplatte (51) an der oberen Befestigungsstelle (13, 43) im Bereich der Ausnehmung (15) festgelegt ist und bei in der Ausnehmung (15) montierter Verlängerungsplatte (51) an einer alternativen Befestigungsstelle (52, 53) auf der Verlängerungsplatte (51) befestigt ist.

3. Rückentrage nach Anspruch 2, wobei die obere Befestigungsstelle (13, 43) des ersten Gurtabschnittes (11, 41, 111, 141) an der Rückenplatte (2) zu einem unteren Ende (20) des unteren Endabschnitts (6) der Rückenplatte (2) einen ersten Abstand (d1) aufweist und die alternative Befestigungsstelle (52, 53) auf der Verlängerungsplatte (51) bei in der Ausnehmung (15) montierter Verlängerungsplatte (51) zu dem unteren Ende (20) einen zweiten Abstand (d2) aufweist, und wobei der erste Abstand (d1) kleiner als der zweite Abstand (d2) ist.

4. Rückentrage nach Anspruch 2 oder 3, wobei bei in der Ausnehmung (15) montierter Verlängerungsplatte (51) die Verlängerungsplatte (51) über das obere Ende (7) der Rückenplatte (2) vorsteht.

5. Rückentrage nach einem der Ansprüche 2 bis 4, wobei sich die Verlängerungsplatte (51) und die Rückenplatte (2) bei in der Ausnehmung (15) montierter Verlängerungsplatte (51) einander in Richtung der Längserstreckung (50) der Rückenplatte (2) überlappen.

6. Rückentrage nach Anspruch 5, wobei die Verlängerungsplatte (51) bei in der Ausnehmung montierter Verlängerungsplatte (51) in Richtung der Längserstreckung (50) der Rückenplatte (2) eine maximale Höhe (h) aufweist, und die Verlängerungsplatte (51) mit mindestens einem Viertel ihrer maximalen Höhe (h) an der Rückenplatte (2) anliegt.

7. Rückentrage nach einem der Ansprüche 2 bis 6, wobei die Verlängerungsplatte (51) eine im montierten Zustand der Verlängerungsplatte (51) senkrecht zur Längserstreckung (50) der Rückenplatte (2) gemessene Breite (b) aufweist, und wobei die Breite (b) mindestens zwei Drittel einer in gleicher Richtung gemessenen Seitenbreite (sb) der Rückenplatte (2) beträgt.

8. Rückentrage nach einem der Ansprüche 2 bis 7, wobei die Verlängerungsplatte (51) mindestens zwei alternative Befestigungsstellen (52, 53) aufweist, und wobei ein im montierten Zustand der Verlängerungsplatte (51) in Richtung senkrecht zur Längserstreckung (50) der Rückenplatte (2) zwischen den beiden Befestigungsstellen (52, 53) gemessener maximaler Abstand (smx) mindestens zwei Drittel der in Richtung senkrecht zur Längserstreckung (50) der Rückenplatte (2) gemessenen Breite (b) der Verlängerungsplatte (51) entspricht.

9. Rückentrage nach einem der Ansprüche 2 bis 8, wobei die Rückenseite (10) der Rückenplatte (2) und die Verlängerungsplatte (51) bei in der Ausnehmung (15) montierter Verlängerungsplatte (51) eine gemeinsame Rückenfläche (30) der Rückentrage (1) ausbilden.

10. Rückentrage nach einem der Ansprüche 2 bis 9, wobei die Verlängerungsplatte (51) starr mit der Rückenplatte (2) verbunden ist.

11. Rückentrage nach einem der Ansprüche 1 bis 10, wobei die obere Befestigungsstelle (13, 43) in der Ausnehmung (15) angeordnet ist.

12. Rückentrage nach einem der Ansprüche 2 bis 11, wobei in einem Boden (17) der Ausnehmung (15) eine erste durchgehende Öffnung (18) ausgebildet ist, die bei montierter Verlängerungsplatte (51) in Überdeckung zu einer zweiten durchgehenden Öffnung (54) der in der Ausnehmung (15) montierten Verlängerungsplatte (51) liegt, wobei die erste Öffnung (18) und die zweite Öffnung (51) eine gemeinsame Aufnahme (31) für einen Haken bilden.

13. Rückentrage nach einem der Ansprüche 1 bis 12, wobei auf der Rückentrage (1) eine Last (9) angeordnet ist, dass die Rückentrage (1) und die Last (9) eine bauliche Einheit (32) bilden, und dass an der Last (9) ein Griff (19) zum Tragen der Einheit (32) ausgebildet ist.

14. Verlängerungsplatte für eine Rückentragenach einem der Ansprüche 1 bis 13,
wobei die Verlängerungsplatte (51) starr und einteilig ausgebildet ist, wobei die Verlängerungsplatte (51) in einer als Breitenrichtung (60) bezeichneten Raumrichtung ihre größte Ausdehnung als Breite (b) aufweist,
wobei die Verlängerungsplatte (51) eine senkrecht zur Breitenrichtung (60) in Richtung einer Höhenrichtung (70) gemessene maximale Höhe (h) aufweist, und
wobei die Verlängerungsplatte (51) eine senkrecht zur Höhenrichtung (70) und zur Breitenrichtung (60) in einer Dickenrichtung (80) gemessene maximale Dicke (t) aufweist, wobei die Breite (b) größer als die maximale Höhe (h) ist, und die maximale Höhe (h) größer als die maximale Dicke (t) ist, und wobei in der Verlängerungsplatte (51) mindestens eine Befestigungsstelle (52, 53) für einen ersten Gurtabschnitt (41) der Rückentrage (1) und ein Anbindungselement (55) zur Anbindung der Verlängerungsplatte (51) an die Rückentrage (1) angeordnet ist, wobei die Verlängerungsplatte (51) um die Höhen-richtung (70) herum gewölbt verläuft, wobei sich die Verlängerungsplatte (51) in Höhenrichtung (70) aus einer oberen Hälfte (57) und einer unteren Hälfte (56) zusammensetzt, und wobei das Anbindungselement (55) in der unteren Hälfte (56) der maximalen Höhe (h) angeordnet ist, und wobei die Befestigungsstelle (52, 53) in der oberen Hälfte (57) der maximalen Höhe (h) angeordnet ist, wobei die Verlängerungsplatte (51) in der oberen Hälfte (57) eine erste Dicke (t1) aufweist, wobei die Verlängerungsplatte (51) in der unteren Hälfte (56) eine zweite Dicke (t2) aufweist, und wobei die erste Dicke (t1) größer als die zweite Dicke (t2) ist.

## Claims

1. Back carrier comprising a back panel (2) and at least one shoulder strap (3, 33, 103, 133), wherein the back panel (2) has a longitudinal extent (50) and, in the direction of its longitudinal extent (50), has an upper end portion (5) and a lower end potion (6), wherein the upper end portion (5) reaches as far as the upper end (7) of the back panel (2), and the back panel (2) has a load side (8), which is directed towards a load (9) which is to be carried, and the back panel (2) has a back side (10), which is directed towards a user's back, wherein the shoulder strap (3, 33, 103, 133) runs on the back side (10), and the shoulder strap (3, 33, 103, 133) is fastened at an upper fastening location (13, 43) by way of a first strap portion (11, 41, 111, 141), in the region of the upper end portion (5), and is fastened at a lower fastening location (14, 44) by way of a second strap portion (12, 42, 112, 142), in the region of the lower end portion (6), wherein, in the region of the upper end portion (5), the back panel (2) has a recess (15) for accommodating an extension panel (51), and wherein, as seen in the direction of the longitudinal extent (50) of the back panel (2), the recess (15) is designed to be open towards the upper end (7) of the back panel (2), wherein the recess (15) has a base (17), wherein the recess (15) has an edge (23) which protrudes in relation to the base (17), wherein lateral edges of the protruding edge (23) are connected to one another via an upper edge (25) of the back panel (2), wherein the protruding edge (23) is flush with the back side (10) outside the recess (15), and a step is formed in the back side (10) of the back panel (2) by the protruding edge (23), wherein the recess (15) has a recess width (ab) measured perpendicularly in relation to the longitudinal extent (50) of the back panel (2), and wherein the recess width (ab) is at least two thirds of a lateral width (sb) of the back panel (2), as measured in the same direction.

2. Back carrier according to claim 1,
wherein the back carrier (1) additionally comprises an extension panel (51), wherein the back carrier (1) can be used optionally with or without the extension panel (51), and wherein, when the extension panel (51) has been removed, the first strap portion (11, 41, 111, 141) of the shoulder strap (3, 33, 103, 133) is secured at the upper fastening location (13, 43) in the region of the recess (15) and, when the extension panel (51) has been fitted in the region recess (15), the first belt portion is fastened at an alternative fastening location (52, 53) on the extension panel (51).

3. Back carrier according to claim 2,
wherein the upper fastening location (13, 43) of the first strap portion (11, 41, 111, 141) on the back panel (2) is at a first distance (d1) from a lower end (20) of the lower end portion (6) of the back panel (2) and, when the extension panel (51) has been fitted in the recess (15), the alternative fastening location (52, 53) on the extension panel (51) is at a second distance (d2) from the lower end (20), and wherein the first distance (d1) is smaller than the second distance (d2).

4. Back carrier according to claim 2 or 3,
wherein, when the extension panel (51) has been fitted in the recess (15), the extension panel (51) protrudes beyond the upper end (7) of the back panel (2).

5. Back carrier according to one of claims 2 to 4,
wherein, when the extension panel (51) has been fitted in the recess (15), the extension panel (51) and the back panel (2) overlap one another in the direction of the longitudinal extent (50) of the back panel (2).

6. Back carrier according to claim 5,
wherein, when the extension panel (51) has been fitted in the recess, the extension panel (51) has a maximum height (h), as seen in the direction of the longitudinal extent (50) of the back panel (2), and the extension panel (51) has at least one quarter of its maximum height (h) butting against the back panel (2).

7. Back carrier according to one of claims 2 to 6,
wherein the extension panel (51) has a width (b) measured perpendicularly in relation to the longitudinal extent (50) of the back panel (2) when the extension panel (51) is in the fitted state, and wherein the width (b) is at least two thirds of a lateral width (sb) of the back panel (2), as measured in the same direction.

8. Back carrier according to one of claims 2 to 7,
wherein the extension panel (51) has at two alternative fastening locations (52, 53), and wherein a maximum distance (smx) measured between the two fastening locations (52, 53) in direction perpendicular to the longitudinal extent (50) of the back panel (2), when the extension panel (51) is in the fitted state, corresponds to at least two thirds of the width (b) of the extension panel (51), as measured in a direction perpendicular to the longitudinal extent (50) of the back panel (2).

9. Back carrier according to one of claims 2 to 8,
wherein, when the extension panel (51) has been fitted in the recess (15), the back side (10) of the back panel (2) and the extension panel (51) form a common back surface (30) of the back carrier (1).

10. Back carrier according to one of claims 2 to 9,
wherein the extension panel (51) is connected rigidly to the back panel (2).

11. Back carrier according to one of claims 1 to 10,
wherein the upper fastening location (13, 43) is arranged in the recess (15).

12. Back carrier according to one of claims 2 to 11,
wherein a first through-opening (18) is formed in a base (17) of the recess (15) and, when the extension panel (51) has been fitted, is located in an overlapping state in relation to a second through-opening (54) of the extension panel (51) fitted in the recess (15), wherein the first opening (18) and the second opening (51) form a common mount (31) for a hook.

13. Back carrier according to one of claims 1 to 12,
wherein a load (9) is arranged on the back carrier (1), the back carrier (1) and the load (9) form a structural unit (32), and grip (19) for carrying the unit (32) is formed on the load (9).

14. Extension panel for a back carrier according to one of claims 1 to 13,
wherein the extension panel (51) is of rigid and single-piece design, wherein the greatest extent of the extension panel (51), in a spatial direction referred to as the width direction (60), is its width (b), wherein the extension panel (51) has a maximum height (h) measured in a height direction (70), perpendicularly in relation to the width direction (60), and wherein the extension panel (51) has a maximum thickness (t) measured in a thickness direction (80), perpendicularly in relation to the height direction (70) and in relation to the width direction (60), wherein the width (b) is greater than the maximum height (h), and the maximum height (h) is greater than the maximum thickness (t), and wherein the extension panel (51) has at least one fastening location (52, 53) for a first strap portion (41) of the back carrier (1) and also has an attachment element (55) for attaching the extension panel (51) to the back carrier (1), wherein the extension panel (51) runs in a curved state about the height direction (70), wherein, as seen in the height direction (70), the extension panel (51) is made up of an upper half (57) and of a lower half (56), and wherein the attachment element (55) is arranged in the lower half (56) of the maximum height (h), and wherein the fastening location (52, 53) is arranged in the upper half (57) of the maximum height (h), wherein the extension panel (51) has first thickness (t1) in the upper half (57), wherein the extension panel (51) has a second thickness (t2) in the lower half (56), and wherein the first thickness (t1) is greater than the second thickness (t2).

## Revendications

1. Dispositif de portage sur le dos comportant une plaque dorsale (2) et au moins une sangle d'épaule (3, 33, 103, 133), la plaque dorsale (2) présentant une étendue longitudinale (50) et possédant, dans la direction de son étendue longitudinale (50), une partie d'extrémité supérieure (5) et une partie d'extrémité inférieure (6), la partie d'extrémité supérieure (5) s'étendant jusqu'à l'extrémité supérieure (7) de la plaque dorsale (2), et la plaque dorsale (2) comprenant un côté charge (8), qui est tourné vers une charge (9) à porter, et la plaque dorsale (2) comprenant un côté dos (10), qui est tourné vers le dos d'un utilisateur, la sangle d'épaule (3, 33, 103, 133) s'étendant sur le côté dos (10), et la sangle d'épaule (3, 33, 103, 133) étant fixée par une première partie de sangle (11, 41, 111, 141) à un point de fixation supérieur (13, 43) dans la région de la partie d'extrémité supérieure (5) et étant fixée par une deuxième partie de sangle (12, 42, 112, 142) à un point de fixation inférieur (14, 44) dans la région de la partie d'extrémité inférieure (6), la plaque dorsale (2) comprenant, dans la région de la partie d'extrémité supérieure (5), un évidement (15) servant au logement d'une plaque d'extension (51), et l'évidement (15) étant réalisé de manière ouverte vers l'extrémité supérieure (7) de la plaque dorsale (2) dans la direction de l'étendue longitudinale (50) de la plaque dorsale (2), l'évidement (15) possédant un fond (17), l'évidement (15) possédant un bord (23) saillant par rapport au fond (17), des bords latéraux du bord saillant (23) étant reliés l'un à l'autre par le biais d'un bord supérieur (25) de la plaque dorsale (2), le bord saillant (23) étant formé en affleurement avec le côté dos (10) à l'extérieur de l'évidement (15) et un gradin dans le côté dos (10) de la plaque dorsale (2) étant formé par le bord saillant (23), l'évidement (15) présentant une largeur d'évidement (ab) mesurée perpendiculairement à l'étendue longitudinale (50) de la plaque dorsale (2), et la largeur d'évidement (ab) valant au moins deux tiers d'une largeur latérale (sb) de la plaque dorsale (2) mesurée dans la même direction.

2. Dispositif de portage sur le dos selon la revendication 1,
le dispositif de portage sur le dos (1) comportant en outre une plaque d'extension (51), le dispositif de portage sur le dos (1) pouvant être utilisé sélectivement avec ou sans la plaque d'extension (51), et la première partie de sangle (11, 41, 111, 141) de la sangle d'épaule (3, 33, 103, 133) étant, lorsque la plaque d'extension (51) est démontée, assujettie au point de fixation supérieur (13, 43) dans la région de l'évidement (15) et étant, lorsque la plaque d'extension (51) est montée dans l'évidement (15), fixée à un autre point de fixation (52, 53) sur la plaque d'extension (51).

3. Dispositif de portage sur le dos selon la revendication 2,
le point de fixation supérieur (13, 43) de la première partie de sangle (11, 41, 111, 141) à la plaque dorsale (2) présentant une première distance (d1) par rapport à une extrémité inférieure (20) de la partie d'extrémité inférieure (6) de la plaque dorsale (2) et l'autre point de fixation (52, 53) sur la plaque d'extension (51), lorsque la plaque d'extension (51) est montée dans l'évidement (15), présentant une deuxième distance (d2) par rapport à l'extrémité inférieure (20), et la première distance (dl) étant inférieure à la deuxième distance (d2).

4. Dispositif de portage sur le dos selon la revendication 2 ou 3,
la plaque d'extension (51) faisant saillie au-delà de l'extrémité supérieure (7) de la plaque dorsale (2) lorsque la plaque d'extension (51) est montée dans l'évidement (15).

5. Dispositif de portage sur le dos selon l'une des revendications 2 à 4,
la plaque d'extension (51) et la plaque dorsale (2) se chevauchant l'une l'autre dans la direction de l'étendue longitudinale (50) de la plaque dorsale (2) lorsque la plaque d'extension (51) est montée dans l'évidement (15).

6. Dispositif de portage sur le dos selon la revendication 5,
la plaque d'extension (51) présentant, lorsque la plaque d'extension (51) est montée dans l'évidement, une hauteur maximale (h) dans la direction de l'étendue longitudinale (50) de la plaque dorsale (2), et la plaque d'extension (51) s'appuyant sur au moins un quart de sa hauteur maximale (h) contre la plaque dorsale (2).

7. Dispositif de portage sur le dos selon l'une des revendications 2 à 6,
la plaque d'extension (51) présentant une largeur (b) mesurée dans l'état monté de la plaque d'extension (51) perpendiculairement à l'étendue longitudinale (50) de la plaque dorsale (2), et la largeur (b) valant au moins deux tiers d'une largeur latérale (sb) de la plaque dorsale (2) mesurée dans la même direction.

8. Dispositif de portage sur le dos selon l'une des revendications 2 à 7,
la plaque d'extension (51) comprenant au moins deux autres points de fixation (52, 53), et une distance maximale (smx) mesurée dans l'état monté de la plaque d'extension (51) dans la direction perpendiculaire à l'étendue longitudinale (50) de la plaque dorsale (2) entre les deux points de fixation (52, 53) correspondant au moins à deux tiers de la largeur (b) de la plaque d'extension (51) mesurée dans la direction perpendiculaire à l'étendue longitudinale (50) de la plaque dorsale (2).

9. Dispositif de portage sur le dos selon l'une des revendications 2 à 8,
le côté dos (10) de la plaque dorsale (2) et la plaque d'extension (51) formant une surface dorsale (30) commune du dispositif de portage sur le dos (1) lorsque la plaque d'extension (51) est montée dans l'évidement (15).

10. Dispositif de portage sur le dos selon l'une des revendications 2 à 9,
la plaque d'extension (51) étant reliée rigidement à la plaque dorsale (2).

11. Dispositif de portage sur le dos selon l'une des revendications 1 à 10,
le point de fixation supérieur (13, 43) étant disposé dans l'évidement (15).

12. Dispositif de portage sur le dos selon l'une des revendications 2 à 11,
une première ouverture traversante (18) étant réalisée dans un fond (17) de l'évidement (15), laquelle ouverture traversante est, lorsque la plaque d'extension (51) est montée, en coïncidence avec une deuxième ouverture traversante (54) de la plaque d'extension (51) montée dans l'évidement (15), la première ouverture (18) et la deuxième ouverture (51) formant un logement (31) commun pour un crochet.

13. Dispositif de portage sur le dos selon l'une des revendications 1 à 12,
une charge (9) étant disposée sur le dispositif de portage sur le dos (1), le dispositif de portage sur le dos (1) et la charge (9) formant une unité structurale (32), et une poignée (19) servant à porter l'unité (32) étant réalisée sur la charge (9).

14. Plaque d'extension pour un dispositif de portage sur le dos selon l'une des revendications 1 à 13,
la plaque d'extension (51) étant réalisée rigidement et d'une seule pièce, la plaque d'extension (51) présentant sa plus grande dimension en tant que largeur (b) dans une direction spatiale désignée par direction de la largeur (60), la plaque d'extension (51) présentant une hauteur maximale (h) mesurée perpendiculairement à la direction de la largeur (60) dans une direction de la hauteur (70), et la plaque d'extension (51) présentant une épaisseur maximale (t) mesurée perpendiculairement à la direction de la hauteur (70) et à la direction de la largeur (60) dans une direction de l'épaisseur (80), la largeur (b) étant supérieure à la hauteur maximale (h), et la hauteur maximale (h) étant supérieure à l'épaisseur maximale (t), et au moins un point de fixation (52, 53) pour une première partie de sangle (41) du dispositif de portage sur le dos (1) et un élément de connexion (55) pour la connexion de la plaque d'extension (51) au dispositif de portage sur le dos (1) étant disposés dans la plaque d'extension (51), la plaque d'extension (51) s'étendant de manière bombée autour de la direction de la hauteur (70), la plaque d'extension (51) étant constituée d'une moitié supérieure (57) et d'une moitié inférieure (56) dans la direction de la hauteur (70), et l'élément de connexion (55) étant disposé dans la moitié inférieure (56) de la hauteur maximale (h), et le point de fixation (52, 53) étant disposé dans la moitié supérieure (57) de la hauteur maximale (h), la plaque d'extension (51) présentant dans la moitié supérieure (57) une première épaisseur (t1), la plaque d'extension (51) présentant dans la moitié inférieure (56) une deuxième épaisseur (t2), et la première épaisseur (t1) étant supérieure à la deuxième épaisseur (t2).
